(19) Europäisches Patentamt
European Patent Office
Office européen des brevets

(11) EP 1 877 839 B1

(12) **FASCICULE DE BREVET EUROPEEN**

(45) Date de publication et mention de la délivrance du brevet:
**03.12.2008 Bulletin 2008/49**

(21) Numéro de dépôt: **06726287.3**

(22) Date de dépôt: **29.03.2006**

(51) Int Cl.:
***G02B 1/04*** *(2006.01)*

(86) Numéro de dépôt international:
**PCT/FR2006/050272**

(87) Numéro de publication internationale:
**WO 2006/103371 (05.10.2006 Gazette 2006/40)**

(54) **FORMULATION POLY(THIO)URETHANE THERMODURCISSABLE COMPRENANT AU MOINS UN COPOLYMERE A BLOCS ET SON APPLICATION DANS L'OPTIQUE POUR LA FABRICATION DE VERRES ORGANIQUES A TENACITE AMELIOREE**

HEISSHÄRTENDE POLY(THIO)URETHANFORMULIERUNG MIT MINDESTENS EINEM BLOCKCOPOLYMER UND VERWENDUNG DAFÜR IN DER OPTIK ZUR HERSTELLUNG ORGANISCHER LINSEN MIT VERBESSERTER ZÄHIGKEIT

THERMOSETTING POLY(THIO)URETHANE FORMULATION COMPRISING AT LEAST ONE BLOCK COPOLYMER AND USE THEREOF IN OPTICS FOR THE PRODUCTION OF ORGANIC LENSES HAVING IMPROVED TOUGHNESS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.03.2005 FR 0550847**

(43) Date de publication de la demande:
**16.01.2008 Bulletin 2008/03**

(73) Titulaire: **ESSILOR INTERNATIONAL (Compagnie Générale d'Optique)
94220 Charenton le Pont (FR)**

(72) Inventeurs:
- **GUERRET, Olivier
F-64230 Mazerolles (FR)**
- **JAFFRENNOU, Boris
F-69007 Lyon (FR)**
- **LESARTRE, Noémie
F-94220 Charenton-le-pont (FR)**
- **MECHIN, Françoise
F-69006 Lyon (FR)**
- **PASCAULT, Jean-Pierre
F-69100 Villeurbanne (FR)**

(74) Mandataire: **Catherine, Alain et al
Cabinet Harlé & Phélip
7 rue de Madrid
75008 Paris (FR)**

(56) Documents cités:
**EP-A- 1 116 735
WO-A-20/04005403
US-A- 6 008 296**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 877 839 B1

## Description

La présente invention concerne d'une manière générale un mélange polymérisable comprenant une formulation poly(thio)uréthane thermodurcissable et au moins un copolymère à blocs, des articles moulés transparents à ténacité améliorée, notamment des articles d'optique, comprenant un substrat en verre poly(thio)uréthane obtenu par polymérisation du mélange ci-dessus, et un procédé d'obtention de tels articles. Ces articles possèdent, du fait de leur ténacité améliorée, une meilleure résistance aux chocs et à la propagation de fissures. L'invention concerne plus particulièrement le domaine des lentilles ophtalmiques.

Il existe deux types de substrats généralement utilisés pour la fabrication d'articles d'optique tels que des lentilles ophtalmiques : les substrats en verre minéral et les substrats en verre organique. Actuellement, le marché tend à se développer très largement en faveur des verres organiques qui présentent deux avantages majeurs par rapport aux verres minéraux : leur bonne résistance aux chocs et leur légèreté. Les substrats en verre organique les plus utilisés sont le polycarbonate de bisphénol A et celui obtenu par polymérisation du monomère bis(allyl carbonate) du diéthylèneglycol, vendu notamment sous la dénomination commerciale CR 39® par la société PPG INDUSTRIES. Une telle lentille est commercialisée sous le nom Orma® par la société Essilor. D'autres allylcarbonates de polyols aliphatiques ou aromatiques, linéaires ou ramifiés, peuvent être employés. On peut également citer les verres organiques obtenus par polymérisation de monomères thio(méth)acryliques, tels que ceux décrits dans la demande de brevet français FR 2 734 827, de formulations thiouréthane telles que celles décrites dans les demandes WO 00/26272 et EP 0645647, de monomères (méth)acrylates d'alkyle en C1-C4, tels que le méthacrylate de méthyle, de monomères poly(méth)acrylates aromatiques polyéthoxylés tels que les di(méth)acrylates de bisphénol A éthoxylés, notamment le 2,2-bis [4-(méthacryloxy-diéthoxy)-phényl]propane. Le groupe (méth)acrylate désigne dans la présente invention un groupe méthacrylate ou acrylate. Les résines thermodurcissables de type polythiouréthane sont particulièrement intéressantes car elles permettent d'atteindre des indices de réfraction élevés, généralement compris entre 1,6 et 1,74, préférentiellement entre ne =1,67 et ne= 1,74, synonymes de verres plus fins et plus plats. Ces performances sont dues à l'incorporation d'atomes lourds, tels que le soufre, ou de groupes aromatiques dans les chaînes polymériques.

Les montures dites « percées », qui ne comportent pas de cercle venant enserrer la périphérie des lentilles ophtalmiques, rencontrent actuellement un vif succès. Pour fixer les branches sur ces nouvelles montures, un perçage du verre est accompli, par usinage. Un moyen de fixation est ensuite introduit dans le trou et les branches sont montées solidaires de ce moyen de fixation. Le verre, dans la zone percée, est soumis à des tensions lors de l'utilisation normale de la monture, lors de l'ouverture et de la fermeture des branches notamment. Or, il a été constaté que des fissures visibles à l'oeil nu peuvent se propager à partir de la périphérie du trou, sur une distance de plusieurs millimètres lorsque l'on utilise certains substrats organiques de lentilles ophtalmiques connus. L'amélioration des propriétés de résistance aux chocs et à la propagation de fissures des substrats commerciaux en verre poly(thio)uréthane à haut indice de réfraction est donc un but que cherchent à atteindre les fabricants.

Un alliage de polymères désigne un mélange d'au moins deux polymères de nature chimique différente (ce qui inclut les copolymères), quel que soit le nombre de phases qu'il contient. Il existe trois grandes catégories d'alliages de polymères : (1) alliage d'un thermodurcissable avec un thermodurcissable; (2) alliage d'un thermoplastique (et/ou élastomère) avec un thermoplastique (et/ou élastomère); (3) alliage d'un thermoplastique (et/ou élastomère) avec un thermodurcissable. La catégorie (1) regroupe la gamme des réseaux interpénétrés (IPN). La catégorie (2) est la plus étudiée dans la littérature. D'une manière générale, deux matériaux thermoplastiques ne sont pas miscibles. Ils peuvent être compatibilisés à l'aide de copolymères à blocs, notamment de type dibloc. La diminution de la tension et l'amélioration de l'adhésion interfaciales permettent d'obtenir des morphologies plus fines et favorisent notamment le transfert de contraintes entre les phases, améliorant les propriétés mécaniques. La catégorie (3) regroupe des matériaux aux propriétés modulables, notamment les propriétés optiques et mécaniques, puisqu'ils peuvent combiner les avantages de la phase thermodurcie, par exemple la résistance aux solvants, ou bien un haut indice de réfraction, à ceux du polymère thermoplastique (et/ou élastomère), par exemple la résistance aux chocs. Ce troisième type d'alliage peut également présenter l'intérêt de faciliter la mise en oeuvre des matériaux mis en jeu, lorsque par exemple des monomères liquides de la composition polymérisable thermodurcissable sont utilisés comme solvants réactifs du matériau thermoplastique.

Cependant, la gamme d'alliages de polymères qui soient transparents est restreinte, notamment dans le cas d'alliages du type thermoplastique /thermodurci. D'une manière générale, deux conditions doivent être respectées afin d'obtenir une telle propriété pour un alliage d'une phase thermodurcie issue d'une composition polymérisable thermodurcissable liquide avec un second matériau : (a) le second matériau doit présenter une bonne miscibilité avec la composition polymérisable thermodurcissable, de façon à ce qu'il puisse y être solubilisé relativement facilement; (b) une démixtion, c'est à dire une macro-séparation de phase entre la matrice en croissance et la phase constituée par le second matériau, doit être évitée en cours de polymérisation du matériau thermodurcissable.

De façon simplifiée, l'état de miscibilité de tout mélange est gouverné par l'énergie libre de mélange $\Delta G_m$ :

$$\Delta G_m = \Delta H_m - T\Delta S_m$$

où $\Delta H_m$ est l'enthalpie de mélange et $\Delta S_m$ l'entropie de mélange.

La condition nécessaire (mais non suffisante) pour qu'un mélange soit miscible est que $\Delta G_m$ soit négatif. Lorsque $\Delta G_m$ est positif, le mélange se sépare en deux phases. Dans le cas des mélanges réactifs, le diagramme de phase évolue au fur et à mesure de l'avancement de la réaction, définissant en tout temps/conversion un nouvel équilibre thermodynamique. L'augmentation de la masse molaire des espèces dans la matrice en croissance entraîne une diminution de l'entropie de mélange $\Delta S_m$ et donc à une augmentation de $\Delta G_m$ qui peut se traduire par une macro-séparation de phase, c'est-à-dire l'expulsion de la phase constituée du second matériau. Dans le cas où les indices de réfraction de la phase thermodurcie et de la phase constituée par le second matériau sont différents, cette macro-séparation de phase conduit à un matériau diffusant. Il apparaît un aspect laiteux au sein de l'article constitué de l'alliage de polymères.

Dans le cas où ledit article est le substrat en verre organique d'une lentille ophtalmique, la diffusion altère la qualité de la vision pour le porteur.

Deux grandes familles d'additifs polymères sont classiquement utilisées dans le renforcement des systèmes thermodurcissables : les additifs dits "initialement miscibles" et les particules préformées de type coeur-écorce. Mais depuis quelques années, l'utilisation de copolymères à blocs comme additifs thermoplastiques pour l'amélioration des propriétés mécaniques de réseaux thermodurcissables se développe.

Le premier concept de renforcement des systèmes thermodurcissables, qui est également le plus utilisé, repose sur la voie dite initialement miscible, selon laquelle l'additif est dissout dans les précurseurs du système thermodurcissable. En raison de l'augmentation de la masse molaire du système en cours de polymérisation, un phénomène de séparation de phases intervient, conduisant à un système final biphasique, constitué d'une phase riche en additif et d'une phase riche en thermodurcissable. Pour de faibles quantités d'additifs, la structure thermodurcissable finale contient donc des inclusions dispersées d'additifs. Ces additifs peuvent être de deux types, soit des élastomères, soit des thermoplastiques de haute température de transition vitreuse. Les élastomères les plus connus sont les copolymères statistiques du butadiène et de l'acrylonitrile fonctionnalisés en bout de chaîne. Ils peuvent être terminés amine (ATBN : Levita, G.; Marchetti, A.; Butta, E. Polymer 1985, 26, 1110-1116), carboxyle (CTBN : Manzione, L. T.; Gillham, J. K. J. Appl. Polym. Sci. 1981, 26, 907-919) ou époxyde (ETBN : Verchère, D.; Sautereau, H.; Pascault, J. P. J. Appl. Polym. Sci. 1990, 41, 467-485). Les élastomères ont pour avantage, de par leur faible viscosité, de ne pas modifier la faculté de mise en oeuvre du système. La morphologie après réaction est de type biphasique, formée de petites particules d'élastomère (0,1-1 μm) dispersées et liées au réseau. Cependant, les élastomères présentent une limitation essentielle au renforcement des thermodurcissables : lors de la séparation de phases, une fraction de l'additif peut rester dissoute dans la phase riche en thermodurcissable. Dès lors, le réseau plastifié voit sa température de transition vitreuse diminuer, ce qui n'est pas souhaitable puisque de bonnes propriétés thermomécaniques ($Tg \geq 70°C$, préférentiellement $\geq 80°C$, et mieux $\geq 90°C$) sont recherchées. De plus, le concept repose sur un phénomène de macro-séparation de phases en cours de réaction, conduisant à des matériaux finaux opaques, ce qui présente peu d'intérêt dans le domaine de l'optique. Pour pallier aux lacunes des élastomères, des thermoplastiques de haute température de transition vitreuse (Tg), comme les poly(éther-imides) (PEI : Hourston, D. J.; Lane, J. M.; Zhang, H. X. Polym. Int. 1997, 42, 349-355) ou les poly(éther-sulfones) (PES : Raghava, R. S. J. Polym. Sci. B: Polym. Phys. 1987, 25, 1017-1031) sont utilisés pour produire des systèmes formés de particules rigides et ductiles dispersées dans la matrice. Dans ce cas, la température de transition vitreuse n'est pas diminuée. Toutefois, pour une faible concentration en thermoplastique, la présence de nodules de PEI ou de PES modifie peu la résistance à la rupture des matrices thermodurcissables. A de plus fortes concentrations en thermoplastique, en revanche, la morphologie bi-continue obtenue permet une amélioration significative de la résistance à la propagation de fissure. De même que précédemment, le concept repose sur une macro-séparation de phases en cours de polymérisation, conduisant à des matériaux finaux opaques. Un deuxième concept de renforcement des systèmes thermodurcissables consiste à disperser des particules préformées de type coeur-écorce (core-shell) dans la matrice, le coeur étant formé d'un élastomère greffable, réticulé ou insoluble dans les monomères précurseurs du thermodurcissable, l'écorce, greffée sur le coeur, servant à stabiliser la particule dans la résine thermodurcissable. Le contrôle de la taille repose uniquement sur le choix des tailles de particules initiales. Selon ce concept, le renforcement de réseaux époxydes à l'aide de particules coeur poly(acrylate de butyle) /écorce poly(méthacrylate de méthyle) notées PBA / PMMA a été décrit dans l'article Ashida, T.; Katoh, A.; Handa, K.; Ochi, M. J. Appl. Polym. Sci. 1999, 14, 2955-2962. Néanmoins, la taille des particules préformées conférant un renforcement satisfaisant aux chocs est trop élevée pour permettre l'obtention d'un matériau transparent. Les propriétés de résistance à la propagation de fissure de matrices thermodurcissables peuvent donc être améliorées en utilisant l'un ou l'autre de ces concepts. Toutefois, dans les deux cas, les matrices obtenues ne sont pas transparentes, une propriété indispensable dans le domaine de l'optique.

En ce qui concerne le troisième concept de renforcement au choc des matrices thermodurcissables, qui repose sur l'introduction dans ces matrices de copolymères à blocs, seuls quelques exemples récents sont décrits dans la

littérature. L'introduction d'un copolymère tribloc poly(caprolactone)-*bloc*-poly(diméthyl-siloxane)-*bloc*-poly(caprolactone), noté PCL-*b*-PDMS-*b*-PCL, dans les matrices époxydes conduit à la formation de particules d'environ 20 nm de diamètre distribuées de manière homogène dans la matrice. Le matériau final est transparent et le renforcement est supérieur à 100 % pour un mélange contenant 5 % en masse de copolymère, ce que décrit l'article "Ultimate properties of epoxy resins modified with a polysiloxane-polycaprolactone block copolymer", Könczöl, L.; Döll, W.; Buchholz, U.; Mülhaupt, R. J. Appl. Polym. Sci. 1994, 54, 815-826. Dans le même type de matrices, l'introduction de copolymères constitués de blocs souples poly(oxytétraméthylène) et de blocs rigides poly(hexaméthylène téréphtalate) permet également d'améliorer les propriétés mécaniques de la matrice d'après l'article "Toughening of epoxy resins modified with polyetherester block copolymers: the influence of modifier molecular architecture on mechanical properties", Höfflin, F., Könczöl, L.; Döll, W.; Morawiec, J.; Mülhaupt, R. J. Appl. Polym. Sci. 2000, 76, 623-634.

Enfin, l'ajout de copolymères triblocs de type styrène-(1,4-butadiène)-méthacrylate de méthyle (copolymères SBM de type ABC) d'Arkema (ex-Atofina) dans les matrices thermodurcissables époxy a donné lieu à des études récentes et des résultats spectaculaires en terme d'amélioration des propriétés mécaniques des matériaux, qui conservent de plus leur transparence et ne subissent qu'une faible chute de module d'élasticité. Ces travaux sont décrits dans les articles "ABC Triblock Copolymers/Epoxy-Diamine Blends. 1. Keys to achieve Nano-structured Thermosets", Ritzenthaler, S.; Court, F.; David, L.; Girard-Reydet, E.; Leibler, L.; Pascault, J. P. Macromolecules 2002, 35, 6245-6254, "ABC Triblock Copolymers/Epoxy-Diamine Blends. 2. Parameters controlling the Morphologies and Properties", Ritzenthaler, S.; Court, F.; Girard-Reydet, E.; Leibler, L.; Pascault, J. P. Macromolecules 2003, 36, 118-126, "A new class of Epoxy Thermosets", Girard-Reydet, E.; Pascault, J. P.; Bonnet, A.; Court, F.; Leibler, L. Macromol. Symp. 2003, 198, 309-322, et dans la demande de brevet EP 1290088, qui décrit plus particulièrement les copolymères à blocs.

Le troisième concept de renforcement au choc des matrices thermodurcissables par introduction dans ces matrices de copolymères à blocs n'a été décrit que dans le cas de matrices époxydes. Or, il a été dit précédemment qu'il serait souhaitable de disposer de nouvelles formulations poly(thio)uréthane polymérisables, permettant d'obtenir de nouveaux substrats transparents pour articles d'optique à haut indice de réfraction, combinant des propriétés de résistance aux chocs et à la propagation des fissures, en particulier pour l'adaptation sur des montures percées. La solution consistant à introduire dans les formulations poly(thio)uréthanes des copolymères à blocs de type SBM tels que ceux décrits dans le brevet EP 1290088 n'est pas satisfaisante. Les inventeurs ont trouvé qu'elle conduisait à une macro-séparation de phases et à la formation de matériaux finaux totalement opaques. Ce résultat s'explique par le fait que le bloc méthacrylate de méthyle, qui joue le rôle de bloc "compatible" (miscible du début à la fin de la réaction), permettant par là la nano-structuration des triblocs dans les formulations époxydes, ne joue pas ce rôle dans les formulations poly(thio)uréthanes.

L'objectif de la présente invention est donc de fournir un mélange polymérisable comprenant une formulation poly(thio)uréthane thermodurcissable précurseur d'un premier matériau, dans laquelle est solubilisé un second matériau comprenant un (ou plusieurs) copolymère(s) à blocs capable(s) de conférer à la future matrice, constituée du premier matériau, une ténacité améliorée sans la priver de sa transparence. La ténacité est mesurée par le facteur critique d'intensité de contrainte $K_{Ic}$, qui a une incidence favorable sur la résistance aux chocs et la limitation de la propagation de fissures. La gamme de copolymères à blocs définie permet de nano-structurer les matrices poly(thio)uréthane sans engendrer de baisse de la température de transition vitreuse (Tg), qui induirait une chute du module de conservation E' à 100 °C.

L'invention a encore pour objet un article transparent, notamment un article d'optique tel qu'une lentille ophtalmique, résultant de la polymérisation du mélange polymérisable précédent, constitué d'un alliage de polymères comprenant le premier matériau polymère thermodurci et le second matériau polymère modifiant ses propriétés mécaniques et/ou optiques, et ce, en évitant une macro-séparation de phase, de sorte que l'article moulé obtenu soit transparent. L'invention a enfin pour objet un procédé de préparation desdits articles.

Le choix de copolymères à blocs adéquats permet de pallier aux inconvénients des mélanges polymérisables de l'art antérieur. Les inventeurs ont trouvé qu'il était possible de générer in situ, grâce à des copolymères à blocs spécifiques, une phase élastomère suffisamment petite pour ne pas perturber la transparence ni abaisser le module E' à 100° C du matériau.

Les buts décrits ci-dessus sont atteints par un mélange polymérisable liquide comprenant (a) une composition polymérisable thermodurcissable, précurseur par polymérisation d'un premier matériau polymère thermodurci, ladite composition comprenant au moins un polythiol et/ou au moins un polyol, préférentiellement au moins un polythiol, et au moins un polyiso(thio)cyanate, (b) un second matériau polymère solubilisé dans ladite composition polymérisable thermodurcissable, ledit second matériau :

- comprenant au moins un copolymère à blocs comprenant au moins deux blocs polymériques A et B, ledit bloc A étant un bloc élastomère et ledit bloc B étant un bloc hydrophile.
- et formant, après polymérisation du mélange polymérisable, des domaines riches en bloc élastomère A dispersés au sein du premier matériau, lesdits domaines étant de dimensions inférieures à 80 nanomètres, de préférence

inférieures à 50 nanomètres.

Préférentiellement, dans le mélange polymérisable précité, le bloc B est capable d'absorber au moins 2 % de sa masse en eau, et de préférence de 3 à 15 % de sa masse en eau.

Le bloc B peut être rendu hydrophile en le préparant à partir de monomère(s) hydrosoluble(s), c'est-à-dire que le bloc B est un bloc homopolymère formé à partir d'un monomère hydrosoluble ou un bloc copolymère comprenant au moins une unité monomère hydrosoluble.

Il peut être aussi obtenu par traitement d'un bloc homopolymère ou copolymère déjà formé non hydrophile, par exemple en convertissant en groupes hydrophiles des groupes fonctionnels déjà présents dans le bloc homopolymère ou copolymère. Un tel procédé est décrit par exemple dans l'article « Enhanced Fôrster resonance energy transfer in electrostatically self-assembled multilayer films made from new fluorescently labeled polycations », Jean-François Baussard, Jean-Louis Habib-Jiwan, André Laschewsky Langmuir 2003, 19, 7963-7969.

Dans la suite de la demande, on décrira plus particulièrement le mode de préparation à partir de monomères hydrosolubles qui est le mode de réalisation préféré.

Le mélange polymérisable de l'invention fournit, après polymérisation, un article transparent à ténacité améliorée comprenant un alliage du premier matériau polymère thermodurci constituant la matrice dudit article, et du second matériau polymère dispersé au sein dudit premier matériau. Bien que l'exposé s'articule essentiellement autour du cas particulier simple de copolymères à blocs comprenant deux catégories de blocs polymériques, A et B, on notera ici que le mélange polymérisable selon l'invention n'est nullement limité à ce type de copolymères à blocs. Ledit mélange polymérisable peut comprendre tout copolymère à blocs comportant au moins deux blocs A et B, notamment des copolymères à blocs comportant plus de deux catégories de blocs, par exemple des triblocs du type BAB, ABC, BAC ou ACB, pourvu que les blocs polymériques A et B et le matériau résultant de la polymérisation du mélange polymérisable de l'invention possèdent les caractéristiques définies.

Le mélange polymérisable de l'invention est liquide ou peut être rendu liquide, éventuellement par chauffage, dans les conditions de sa réaction de polymérisation. Il comprend une composition polymérisable thermodurcissable, liquide de préférence elle aussi dans ces conditions. Par "liquide", on entend un état de la matière dans lequel celle-ci possède une mobilité suffisante pour pouvoir s'écouler par gravité, mais insuffisante pour pouvoir se déplacer librement dans l'espace. La composition polymérisable thermodurcissable représente de préférence de 50 à 99 % de la masse du mélange polymérisable selon l'invention, de préférence de 70 à 95 %. Cette composition engendre par polymérisation (ou copolymérisation) un premier matériau polymère thermodurci, de type poly(thio)uréthane. Un polythiouréthane est un produit de la réaction d'un isocyanate avec un thiol. Le premier matériau thermodurci peut comprendre un ou plusieurs (co)polymères réticulés, de préférence un seul (co)polymères réticulé. La composition polymérisable thermodurcissable comprend au moins un polythiol et/ou au moins un polyol, préférentiellement au moins un polythiol, et au moins un polyiso(thio)cyanate. Par polythiol, on entend tout composé incorporant dans sa structure au moins deux groupes thiols, tel que les composés di, tri, tétra, penta ou hexathiols. Il peut donc s'agir d'un polymère ou d'un pré-polymère, éventuellement téléchélique, porteur d'au moins deux groupes thiols. Le (ou les) polythiol(s) peuvent être représentés par la formule (I) :

$$R^1(SH)_{n1} \qquad (I)$$

dans laquelle n1 désigne un nombre entier allant de 2 à 6, de préférence 2 à 3, et $R^1$ désigne un radical aliphatique, alicyclique, hétérocyclique ou aromatique dont la valence est égale à n1. $R^1$ peut comprendre des groupes porteurs d'un atome d'hydrogène labile, tels que les groupes amine primaire, amine secondaire et hydroxyle. $R^1$ peut également comprendre un ou plusieurs hétéroatomes dans sa chaîne carbonée, par exemple des atomes de soufre, d'oxygène, de sélénium ou d'azote. Lorsque $R^1$ incorpore dans sa structure un groupe hétérocyclique ou aromatique, ce dernier peut être substitué par un ou plusieurs atomes d'halogène tels que Cl ou Br. De préférence, le polythiol est un monomère polythiol et il comporte deux ou trois groupes thiols. Des exemples de polythiols utilisables dans la présente invention sont donnés dans les brevets EP 394495, US 4775733, US 4609762 et US 5225472. Les polythiols peuvent être choisis, sans limitation, parmi le pentaérythritol tétrakis (3-mercaptoproprionate), le 1-(1'-mercaptoéthylthio)-2,3-dimercapto-propane, le 1-(2'-mercaptopropylthio)-2-(2'-mercaptopropylthio)-2,3-dimercapto-propane, le 1-(3'-mercapto-propylthio)-2,3-dimercaptopropane, le 1-(4'-mercaptobutylthio)-2,3-dimercaptopropane, le 1-(5'-mercaptopentylthio)-2,3-dimercaptopropane, le 1-(6'-mercaptohexylthio)-2-(6'-mercaptohexylthio)-2,3-dimercapto-propane, le 1,2-bis(4'-mercaptobutylthio)-3-mercaptopropane, le 1,2-bis (5'-mercaptopentylthio)-3-mercaptopropane, le 1,2-bis (6'-mercaptohexyl)-3-mercaptopropane, le 1,2,3-tris(mercaptométhylthio) propane, le 1,2,3-tris (3'-mercaptopropylthio)propane, le 1,2,3-tris (2'-mercaptoéthylthio) propane, le 1,2,3-tris(4'-mercaptobutylthio)propane, le 1,2,3-tris(6'-mercapto-hexylthio)propane, le méthanedithiol, le 1,2-éthanedithiol, le 1,3-propanedithiol, le 1,4-butanedithiol, le 1,5-pentanedithiol, le 1,6-hexanedithiol, le 1,7-heptanedithiol, le 1,8-octanedithiol, le 1,9-nonanedithiol, le 1,10-décanedithiol, le 1,11-undécanedithiol, le 1,12-dodécanedithiol, le 1,1-propanedithiol, le 1,2-propanedithiol, le 2,2-propanedithiol, le 1,2-bis (2'-mercaptoéthylthio)-3-mercaptopropane (ou 4-mercaptométhyl-3,6-dithia-1,8-octanedithiol, ou MDO), de formule (II), le 1,2-butanedithiol, le 2,3-butanedithiol, le 2,2-butanedithiol, 1,2-hexanedithiol, le 2,5-hexanedithiol, 2,6-heptanedithiol, le 2,4-pentanedithiol, le 3,3-pentanedithiol, le 7,8-heptadecanedithiol, le 9,10-anthracènediméthanethiol, le 4-éthyl-benzène-1,3-dithiol, le 1,18-octadécanedithiol, le 1,3-(4-chlorophényl)propane-2,2-dithiol, le 1,1-cyclohexanedithiol, le 1,2-cyclohexanedithiol, le 1,4-cyclohexanedithiol, le 1,1-cycloheptanedithiol, le 1,1-cyclopentanedithiol, le dithiopentaérythritol, le 1,4-dithiothréitol, le 1,3-diphénylpropane-2,2-dithiol, le 1,3-dihydroxy-2-propyl-2',3'-dimercaptopropyl-éther, le 2,3-dihydroxypropyl-2',3'-dimercaptopropyl-éther, le 2,6-diméthyloctane-2,6-dithiol, le 2,6-diméthyloctane-3,7-dithiol, le 2,4-diméthylbenzène-1,3-dithiol, le 3,3-diméthylbutane-2,2-dithiol, le 1,3-di(4-méthoxyphényl)-propane-2,2-dithiol, l'acide 10,11-dimercaptoundécanoïque, l'acide 6,8-dimercapto-octanoïque, le 2,5-dimercapto-1,3,4-thiadiazole, le 2,2'-dimercapto-biphényle, le 4,4-dimercaptobiphényle, le 4,4'-dimercaptobibenzyle, le 3,4-dimercaptobutanol, l'acétate de 3,4-dimercaptobutyle, le 2,3-dimercapto-propan-1-ol, le 1,2-dimercapto-1,3-butanediol, l'acide 2,3-dimercaptopropionique, le 1,2-dimercaptopropylméthyléther, le 3,4-thiophènedithiol, le dimercaptopropyl-2',3'-diméthoxypropyléther, le 3,5,5-triméthyhexane-1,1-dithiol, le 2, 5-toluènedithiol, le 3, 4-toluènedithiol, le 1,4-naphtalènedithiol, le 1,5-naphtalènedithiol, le 2,6-naphtalènedithiol, le norbornène-2,3-dithiol, le bis (2-mercaptoisopropyl) éther, le bis(11-mercapto-undécyl) sulfure, le bis (2-mercaptoéthyl) éther, le bis (2-mercaptoéthyl) sulfure, le bis (18-mercapto-octadécyl) sulfure, le bis (8-mercapto-octyl) sulfure, le bis (12-mercaptodécyl) sulfure, le bis (9-mercaptononyl) sulfure, le bis (4-mercaptobutyl) sulfure, le bis (3-mercaptopropyl) éther, le bis (3-mercaptopropyl) sulfure, le bis (6-mercaptohexyl) sulfure, le bis (7-mercaptoheptyl) sulfure, le bis (5-mercaptopentyl) sulfure, l'acide 2,2'-bis (mercaptométhyl) acétique, le 1,1-bis (mercaptométhyl) cyclohexane, le bis (mercaptométhyl)durène, le phénylméthane-1,1-dithiol, le 1,2-benzènedithiol, le 1,3-benzènedithiol, le 1,4-benzènedithiol, le 2-méthylcyclohexane-1,1-dithiol, le 2-méthylbutane-2,3-dithiol, l'éthylène glycol dithioglycolate, l'éthylène glycol bis(3-mercaptopropionate), le 1,2,3-propanetrithiol, le 1,2,4-butanetrithiol, le 1,3,6-hexane trithiol, le triméthylolpropane tris(thioglycolate), le triméthylolpropane tris(3-mercaptopropionate), le triméthylolpropane tris(mercaptoacétate), le pentaérythritol tris(thioglycolate), le pentaérythritol tris(3-mercaptopropionate), le 1,3,5-benzènetrithiol, le 2,4,6-mésitylènetrithiol, le néopentane tétrathiol, le 2,2-bis(mercaptométhyl)-1,3-propanedithiol, le 1,3,5-benzènetrithiol, le 2,4,6-toluènetrithiol, le 2,4,6-méthylènetrithiol, le pentaérythritol tétrakis(thioglycolate), le pentaérythritol tétrakis (mercaptoacétate), le triméthyloléthane tris(mercaptopropionate), le triméthyloléthane tris(mercaptoacétate), le dichloronéopentyl glycol bis(mercaptopropionate), le dibromonéopentyl glycol bis(mercaptopropionate), le dipentaérythritol hexakis(mercaptoacétate), le dimercaptométhyl dithiane, le dimercapto-3-oxapentane, le dimercaptodioxaoctane, le 2-butène-1,4-dithiol, le 3-hexyne-1,6-dithiol, les polyéthylène glycol dithiols et les polythiols correspondant aux formules (III) à (V) et (Va) :

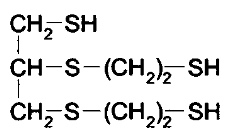
(II)

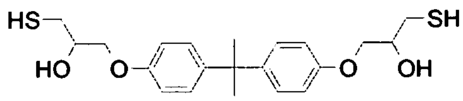
(III)

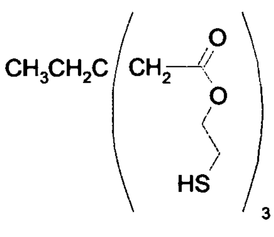
(IV)

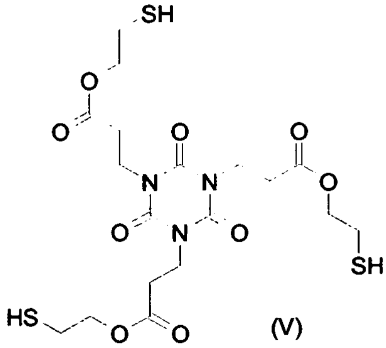
(V)

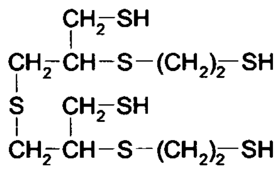
(Va)

De préférence, le (ou les) polythiol(s) est (sont) choisi(s) parmi le pentaérythritol tris(3-mercaptopropionate), le pentaérythritol tétrakis(thioglycolate), le triméthylolpropane tris(3-mercaptopropionate), le triméthylolpropane tris(mercaptoacétate) et les composés de formules (II) et (Va). Le polythiol préféré pour l'invention est le 1,2-bis (2'-mercaptoéthylthio)-3-mercaptopropane (MDO), de formule (II).

On peut également utiliser des prépolymères polythiols, mais les monomères sont préférés.

La composition polymérisable thermodurcissable comprend, outre au moins un polythiol, et/ou au moins un polyol, préférentiellement au moins un polythiol, au moins un polyiso(thio)cyanate, de préférence au moins un polyisocyanate. Par polyiso(thio)cyanate, on entend tout composé incorporant dans sa structure au moins deux groupes isothiocyanate, ou bien au moins deux groupes isocyanate, ou bien au moins un groupe isothiocyanate et au moins un groupe isocyanate. Le polyiso(thio)cyanate peut donc être un polymère ou un pré-polymère, éventuellement téléchélique, satisfaisant la définition ci-dessus. Le (ou les) polyiso(thio)cyanate(s) peuvent être représentés par la formule (VI) :

$$R^2(N{=}C{=}X)_{n2} \qquad \text{(VI)}$$

dans laquelle X représente un atome d'oxygène ou de soufre, n2 désigne un nombre entier allant de 2 à 6 et $R^2$ désigne un radical aliphatique, alicyclique, hétérocyclique ou aromatique dont la valence est égale à n2. $R^2$ peut comprendre des groupes porteurs d'un atome d'hydrogène labile, tels que les groupes amine primaire, amine secondaire et hydroxyle. $R^2$ peut également comprendre un ou plusieurs hétéroatomes dans sa chaîne carbonée, par exemple des atomes de soufre, d'oxygène, de sélénium ou d'azote. Lorsque $R^2$ incorpore dans sa structure un groupe hétérocyclique ou aromatique, ce dernier peut être substitué par un ou plusieurs atomes d'halogène tels que Cl ou Br. De préférence, le polyiso(thio)cyanate est un monomère polyiso(thio)cyanate et il comporte deux ou trois groupes iso(thio)cyanates. Les polyiso(thio)cyanates préférés peuvent être choisis, sans limitation, parmi les diiso(thio)cyanates de tolylène, en particulier les isomères 2,4 et 2,6, les diiso(thio)cyanates de phénylène, en particulier l'isomère méta, les diiso(thio)cyanates d'éthylphénylène, les diiso(thio)cyanates d'isopropylphénylène, les diiso(thio)cyanates de xylylène, en particulier les isomères méta et para, les diiso(thio)cyanates de diéthylphénylène, les diiso(thio)cyanates de diisopropylphénylène, les diiso(thio)cyanates de naphtalène, en particulier l'isomère 1,5, le diiso(thio)cyanate d'hexaméthylène, les bis (iso (thio)cyanatométhyl)-cyclohexanes, les tris (iso(thio)cyanatométhyl)-cyclohexanes, les triiso(thio)cyanates de triméthylbenzène, en particulier les triiso(thio)cyanates de mésitylène, les triiso(thio)cyanato-benzènes, en particulier l'isomère 1,2,4, les (diiso(thio)cyanato-diphényl)-méthanes, en particulier les isomères 4,4' (composés de formule (VII) dans lesquels Z = $CH_2$ et n1 = 1), le tétraméthylène diiso(thio)cyanate, les cyclohexanediiso(thio)cyanates, en particulier l'isomère 1,4, le 1,2-diiso(thio)cyanatopropane, le 1,3-diiso(thio)cyanatopropane, l'éthylène diiso(thio)cyanate, les diiso (thio)cyanates d'hexahydrotolylène, le 1-méthoxyphényl-2,4-diiso(thio)cyanate, les diiso(thio)cyanates de biphénylène, en particulier les isomères 2,2', 2,4' et 4,4', le 3,3'-diméthoxy-4,4'-biphényl diiso(thio)cyanate, le 3,3'-diméthyl-diphénylméthane-4,4'-diiso(thio)cyanate, les tétraméthylxylylène diiso(thio)cyanates, en particulier le diisocyanate de m-phénylènediiso-propylidene (m-TMXDI) et le diisocyanate de p-phénylènediisopropylidene (p-TMXDI), les bis(iso(thio)cyanatométhyl)bicycloheptanes, la lysine ester triiso(thio)cyanate, les triiso(thio)cyanates de triphénylméthane, les triiso(thio) cyanates de bicycloheptane, les triisocyanates d'hexaméthylène, les (diiso(thio)cyanato-dicyclohexyl)-méthanes, en particulier les isomères 4,4' (composés de formule (VIII) dans lesquels Z = $CH_2$ et n1 = 1), et les isomères 2,2' et 2,4', les composés de formules (VII), (VIII), (IX), (X) et les composés de formule (XI), en particulier le diiso(thio)cyanate d'isophorone (composé de formule (XI) dans lequel X = O et $R^1 = R^2 = R^6 = CH_3$) :

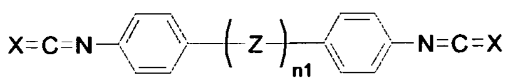

(VII)

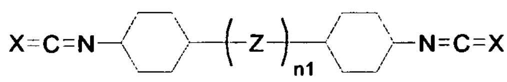

(VIII)

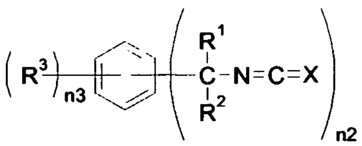

(IX)

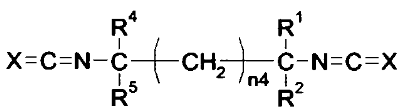

(X)

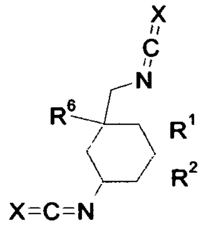

(XI)

dans lesquelles n1 est égal à 0 ou 1, n2 est un nombre entier allant de 2 à 4, n3 est un nombre entier allant de 1 à 4, la somme n2 + n3 ≤ 6, n4 est un nombre entier allant de 1 à 10, de préférence de 1 à 6, X désigne O ou S, de préférence O, Z désigne O, S, Se, NH, C=O, SO, $SO_2$, $SeO_2$, $CH_2$, -CH=CH- ou $-C(R)_2$-avec R représentant un atome d'hydrogène ou un radical alkyle en $C_1$-$C_6$, de préférence $CH_3$ ou $C_2H_5$, $R^1$, $R^2$, $R^4$, $R^5$, $R^6$ désignent indépendamment les uns des autres un atome d'hydrogène ou un radical alkyle en $C_1$-$C_6$, de préférence $CH_3$ ou $C_2H_5$, $R^3$ désigne un atome d'hydrogène, un atome d'halogène, de préférence Cl ou Br, ou un radical alkyle en $C_1$-$C_6$, de préférence $CH_3$ ou $C_2H_5$. De

préférence, $R^1$ et $R^2$ sont identiques, $R^4$ et $R^5$ sont identiques. Les polyiso(thio)cyanates préférés pour l'invention sont les diisocyanates de xylylène.

Il est à noter que le polyiso(thio)cyanate peut être employé sous la forme de l'un de ses dérivés, par exemple son trimère cyclique iso(thio)cyanurate [1,3,5-triazine-2,4,6-(1H,3H,5H)-tri(thi)one], sous la forme d'un dérivé allophanate (issu d'une réaction avec un uréthane), sous la forme d'un dérivé biuret (issu d'une réaction avec une urée) ou bien sous la forme du produit d'addition avec un polythiol du polyiso(thio)cyanate lui-même ou de ses dérivés iso(thio) cyanurate, allophanate, ou biuret.

En général, les polythiols et les polyiso(thio)cyanates sont employés dans des quantités telles que le ratio molaire des groupes iso(thio)cyanate /thiol varie de 0,8 à 1,2. Toutes les combinaisons polythiols /polyiso(thio)cyanates qui conduisent, après polymérisation, à un matériau polymère thermodurci transparent, sont susceptibles d'être utilisées dans la présente invention.

La composition polymérisable thermodurcissable selon l'invention peut comprendre un ou plusieurs catalyseurs de polymérisation destinés à accélérer le durcissement, bien connus de l'homme du métier, dans des proportions classiques. Classiquement, on pourra utiliser des catalyseurs à base d'étain tels que le dibutyldilaurate d'étain.

On pourra également utiliser des sels tels que ceux décrits dans la demande WO 00/26272. Ils peuvent être utilisés seuls ou en mélange avec d'autres agents de modification de durcissement tels que, par exemple, des inhibiteurs de polymérisation, dans des proportions classiques. Des composés électrodonneurs tels que ceux décrits dans la demande WO 00/26272 peuvent également être employés, en particulier lorsque la composition polymérisable thermodurcissable comprend des thiols et/ou iso(thio)cyanates peu réactifs. En général, les composés électrodonneurs stabilisent le cation des sels catalyseurs. Ils contribuent ainsi à la dissociation de la paire d'ions anion/cation et augmentent donc la réactivité de l'anion dans le milieu de polymérisation, et par conséquent favorisent la réaction de polymérisation. Les composés électrodonneurs sont préférentiellement sélectionnés parmi les dérivés de l'acétonitrile tels que les malononitriles, les amides, amines, imines, phosphines, sulfones, sulfoxides, phosphites de trialkyle, phosphites de triaryle, éthers de l'éthylène glycol, éthers couronnes et cryptands. Ils représentent de préférence de 0 à 5 %, mieux de 0 à 1 % en masse, par rapport à la masse du mélange polymérisable. Les composés électrodonneurs préférés sont les éthers couronnes, cryptands, phosphites de trialkyle, phosphites de triaryle et les malononitriles.

La composition polymérisable thermodurcissable selon l'invention peut également comporter un certain nombre d'autres additifs classiquement utilisés dans les compositions polymérisables pour articles d'optique, notamment moulés, en particulier les lentilles ophtalmiques, dans des proportions classiques. Des exemples d'additifs sont, sans limitation, des colorants, des agents photochromiques, des stabilisants tels que des absorbeurs d'UV, des antioxydants et des agents anti-jaunissement, des parfums, des déodorants, des agents de démoulage, des lubrifiants, des promoteurs d'adhésion et des agents de couplage.

Parmi les absorbeurs d'UV (systèmes filtrant les radiations UV) utilisables aux fins de l'invention dans la composition polymérisable thermodurcissable, on peut citer, sans limitation, l'acide 4-aminobenzoïque (PABA) et ses sels, l'acide anthranilique et ses sels, l'acide salicylique et ses sels ou ses esters, notamment les hydroxy benzoates d'aryle, l'acide 4-hydroxycinnamique et ses sels, les dérivés sulfoniques de benzoxazoles, benzimidazoles et benzothiazoles et leurs sels, les benzophénones, notamment les dérivés sulfoniques de benzophénones et les 2-hydroxybenzophénones et leurs sels, les dérivés sulfoniques de benzylidène camphre et leurs sels, les dérivés de benzylidène camphre substitués par un groupe ammonium quaternaire et leurs sels, les dérivés phthalylidène de l'acide camphrosulfonique et leurs sels, les benzotriazoles, notamment les dérivés sulfoniques du benzotriazole et leurs sels, les oxalamides, les oxanilides, et leurs mélanges.

Des exemples non limitatifs d'absorbeurs d'UV utilisables dans la présente invention sont le 2-(2-hydroxyphényl)-2H-benzotriazole, le PBSA (sel de sodium de l'acide 2-phényl-benzimidazole-5-sulfonique, commercialisé sous le nom PARSOL® HS par Givaudan-Roure), le 4-*tert*-butyl-4'-méthoxy-dibenzoylméthane (commercialisé sous le nom PARSOL® 1789 par Givaudan-Roure), le p-méthoxycinnamate de 2-éthylhexyle ou avobenzone (commercialisé sous le nom PARSOL® MCX par Givaudan-Roure), le p-méthoxycinnamate d'octyle, l'UVINUL® MS 40 (acide 2-hydroxy-4-méthoxybenzophénone-5-sulfonique, BASF), l'UVINUL® M 40 (2-hydroxy-4-méthoxybenzophénone, BASF), l'octocrylène (2-cyano-3,3-diphénylacrylate de 2-éthylhexyle), le 4-diméthylaminobenzoate de 2-éthylhexyle (octyl diméthyl-PABA), le salicylate de triéthanolamine, le salicylate d'octyle. Il est également possible d'utiliser des polymères ayant des propriétés de photo-protection UV, notamment les polymères comprenant des groupes benzylidène camphre et/ou benzotriazole, substitués par des groupes sulfonique ou ammonium quaternaire. Ils peuvent être utilisés seuls ou en mélange avec d'autres absorbeurs d'UV.

Des agents anti-jaunissement tels que le 3-méthyl-but-2-èn-1-ol (M-BOL) et ceux décrits dans les brevets US 5442022, US 5445828, US 5702825, US 5741831 et FR 2699541 peuvent être utilisés, sans limitation, seuls ou en mélange.

Bien que, de préférence, la composition polymérisable thermodurcissable selon l'invention ne comporte aucun solvant, elle peut néanmoins comprendre un solvant ou un mélange de solvants en faible quantité. Un solvant peut faciliter la dissolution de sels dans ladite composition, par exemple des catalyseurs se présentant sous forme de sels.

En général, la masse du mélange de solvants représente de 0 à 2 % de la masse de la composition polymérisable thermodurcissable selon l'invention, de préférence de 0 à 0,5 %. Un solvant polaire tel que l'acétonitrile, le tétrahydrofurane ou le dioxane peut être employé. Cependant, pour éviter la génération de bulles et d'une turbidité au cours de la polymérisation, il est préférable d'utiliser un solvant réactif vis-à-vis des thiols ou des iso(thio)cyanates. Les solvants porteurs d'un groupe hydroxyle sont préférés. Parmi ceux-ci, les solvants hydroxylés porteurs en outre d'une double liaison capable de réagir avec un thiol et/ou porteurs d'une autre fonction à hydrogène labile (par exemple NH, SH OH) capable de réagir avec un iso(thio)cyanate sont les plus intéressants. Des solvants acceptables sont le méthanol, l'éthanol, le propanol, l'acétone, l'acétonitrile et le 3-méthyl-but-2-èn-1-ol, qui peut également être employé en tant qu'agent anti-jaunissement.

Le mélange polymérisable de l'invention comprend un second matériau polymère, solubilisé dans la composition polymérisable thermodurcissable précédemment définie. Ceci impose que le second matériau soit initialement soluble dans ladite composition polymérisable thermodurcissable, éventuellement à chaud. De préférence, il y est soluble à une température inférieure à 135 °C. Ce second matériau comprend au moins un copolymère à blocs comportant au moins deux blocs polymériques A et B. Il possède simultanément les propriétés provenant de chacun des deux types de bloc. Dans la présente invention, les blocs de type A et les blocs de type B sont deux catégories de blocs possédant différentes caractéristiques techniques. Ils seront couramment appelés "blocs A" et "blocs B", et peuvent eux-mêmes être constitués de plusieurs blocs. A et B peuvent être des copolymères statistiques.

La composition du mélange polymérisable selon l'invention permet d'éviter une macro-séparation de phases lors du durcissement de la composition polymérisable thermodurcissable. Les copolymères à blocs de l'invention sont capables de nano-structurer les matrices poly(thio)uréthane thermodurcissables précédemment définies, en générant in situ dans lesdites matrices une phase élastomère à l'échelle de la dizaine de nanomètres, ce qui va maintenant être expliqué. Selon l'invention, le second matériau forme, après polymérisation du mélange polymérisable, des domaines riches en bloc élastomère A dispersés au sein du premier matériau thermodurci, lesdits domaines élastomères étant de dimensions inférieures à 80 nanomètres, de préférence inférieures à 50 nanomètres, mieux inférieures à 20 nm. Dans certains cas, il est même possible d'atteindre des dimensions inférieures ou égales à 10 nm.

Par "dimensions du domaine", on entend sa plus grande dimension. Dans le cas d'un domaine sphérique, il s'agit du diamètre du domaine. Dans le cas de domaines en forme d'aiguille, il s'agit de la longueur du domaine.

De préférence, le bloc B est compatible avec le premier matériau thermodurci (la matrice) et de préférence encore, le bloc A est incompatible avec le premier matériau thermodurci. Un bloc B est dit "compatible" avec le premier matériau thermodurci, par opposition à un bloc A "incompatible" avec ledit premier matériau thermodurci, lorsque le bloc B a une affinité avec la composition polymérisable thermodurcissable, permettant, à l'issue de la polymérisation du mélange polymérisable, d'obtenir une nano-structuration des blocs A du second matériau au sein de la matrice constituée par le premier matériau thermodurci. Le rôle du bloc compatible B ou "bloc stabilisant" est de stabiliser dans la matrice les domaines de blocs A, ou "blocs nano-structurants", au cours du durcissement. Un bloc compatible B permet à un copolymère à blocs comprenant les blocs A et B et contenant une proportion molaire appropriée dudit bloc compatible B de conduire à un article exempt de macro-séparation de phases, plus précisément à un copolymère à blocs dispersé dans la matrice.

Le bloc B est en général soluble dans la composition polymérisable thermodurcissable. Un second matériau constitué exclusivement du bloc polymérique B compatible n'engendrerait au cours de la réaction de polymérisation aucune macro-séparation de phases. Au contraire, un second matériau constitué exclusivement du bloc polymérique A incompatible, même s'il est initialement soluble dans la composition polymérisable thermodurcissable, engendrerait au cours de la réaction de polymérisation une macro-séparation de phases conduisant à un article réticulé opaque. La compatibilité ou l'incompatibilité d'un bloc sont sans rapport avec la solubilité dudit bloc ou du copolymère à blocs comprenant ledit bloc dans la composition polymérisable thermodurcissable initiale.

Plus précisément, afin que l'article soit transparent, sa matrice constituée par le premier matériau thermodurci doit être nano-structurée par des domaines de dimensions nanométriques riches en bloc A. Si les dimensions desdits domaines sont trop importantes, l'article devient non transparent, voire opaque. Selon l'invention, les domaines riches en bloc A sont de dimensions inférieures à 80 nanomètres, de préférence inférieures à 50 nanomètres, afin qu'une non transparence dudit article ne soit pas engendrée. On parle alors de micro-séparation de phase, par rapport au phénomène de macro-séparation de phase dans lequel les domaines élastomères sont de dimensions supérieures à 80 nanomètres. Le fait qu'un bloc soit compatible avec le premier matériau thermodurci dépend de multiples paramètres, notamment de la température à laquelle est conduite la réaction de polymérisation et de la teneur massique en second matériau dans le mélange polymérisable.

Le second matériau de l'invention représente en général jusqu'à 50 % de la masse du mélange polymérisable, afin de ne pas perturber la transparence du matériau final. Mieux, il représente de 5 à 15 % de la masse du mélange polymérisable. De préférence, il est constitué d'un seul copolymère à blocs. En général, les copolymères à blocs de l'invention ont une masse molaire moyenne en nombre variant de 1000 à 500000 g/mol, de préférence de 10000 à 500000 g/mol, mieux de 20000 à 200000 g/mol. Chaque bloc peut être relié à l'autre soit directement, au moyen d'une

liaison covalente, soit au moyen d'une molécule intermédiaire ne faisant pas partie intégrante du bloc, reliée à l'un des blocs par une liaison covalente et à l'autre bloc par une autre liaison covalente. Mais la connexion des blocs n'est pas nécessairement linéaire, elle peut également être radiale, dans le cas d'un polymère greffé dont les blocs constituent des chaînes latérales (téléblocs). Les blocs peuvent être des stéréoblocs. Les copolymères à blocs utilisés dans la présente invention peuvent incorporer des blocs de différentes tacticités. Ils peuvent comprendre des blocs atactiques, isotactiques, syndiotactiques et leurs mélanges. De préférence, les blocs sont connectés linéairement.

Le bloc A du copolymère à blocs de l'invention est un bloc élastomère. Par élastomère, on entend classiquement un polymère synthétique possédant les propriétés du caoutchouc naturel (polyisoprène), telles qu'une grande capacité d'extensibilité et de reprise élastique. Le bloc élastomère peut être thermoplastique ou réticulé (par exemple, par un procédé classique de vulcanisation). Des exemples non limitatifs d'élastomères utilisables dans la présente invention sont le polyisoprène, le polybutadiène, le polyisobutylène, certains polyuréthanes et polyacrylates, leurs copolymères, et des copolymères tels que les copolymères du butadiène et de l'acrylonitrile. Par copolymère, on entend dans la présente invention tout copolymère, qu'il soit statistique, alterné, à blocs ou greffé. Le bloc A peut comprendre plusieurs segments constitués par ces élastomères. Préférentiellement, le bloc A est un bloc élastomère thermoplastique. Des exemples non limitatifs d'élastomères thermoplastiques pouvant être employés sont les ionomères tels que ceux décrits dans la demande US 2004209707, certains polyuréthanes, poly(méth)acrylates ou polyesters, le Santoprene® qui est un mélange de polypropylène et d'un copolymère éthylène-propylène-monomère diène (EPDM), ou des copolymères à blocs tels que le SBS ou poly(styrène-butadiène-styrène), des copolymères à blocs polyéther-esters tels que l'Hytrel®, comprenant des blocs rigides polybutylène téréphtalate et des blocs souples polytétraméthylène éther téréphtalate, des copolymères à blocs de type polypropylène composé de blocs atactiques et isotactiques, mais également le Sarlink®, le Vyram®, le Dytron® et le Vistaflex®.

De préférence, le bloc A est un bloc homopolymère ou copolymère comprenant au moins une unité monomère, ladite unité monomère étant choisie parmi le (méth)acrylate de 2-méthoxyéthyle, les (méth)acrylates d'alkyle tels que le (méth)acrylate de butyle, l'acrylate de méthyle, le (méth)acrylate d'éthyle, le (méth)acrylate de 2-éthylhexyle, le (méth) acrylate de benzyle, le (méth)acrylate de 2-phénoxyéthyle, l'acrylate de 2-hydroxyéthyle, un diène tel que l'isoprène, le butadiène, l'isobutylène, le 2,3-diméthyl-1,3-butadiène, le 1,3-pentadiène, le 2-phényl-1,3 butadiène.

Le bloc A est choisi avantageusement parmi les poly(diènes), notamment poly(butadiène), poly(isoprène) et leurs copolymères statistiques ou encore parmi les poly(diènes) partiellement ou totalement hydrogénés.

Parmi les polybutadiènes, on utilise avantageusement ceux dont la Tg (température de transition vitreuse) est la plus faible, par exemple le polybutadiène-1,4 de Tg (vers -90 °C) inférieure à celle du polybutadiène-1,2 (vers 0 °C).

Les blocs A peuvent aussi être hydrogénés. On effectue cette hydrogénation selon les techniques habituelles.

Mieux, ladite unité monomère est choisie parmi l'acrylate de 2-méthoxyéthyle (MEA), l'acrylate de butyle (BA), l'acrylate de méthyle (MA), l'acrylate de benzyle (BnA) et l'acrylate de 2-phénoxyéthyle (PEA). Par unité monomère, on entend le groupe d'atomes généré par une seule molécule monomère dans la structure d'un polymère ou d'un oligomère. Les élastomères de basse Tg étant connus pour présenter des propriétés de renforcement aux chocs, la température de transition vitreuse du bloc A est de préférence inférieure ou égale à 20 °C, mieux inférieure ou égale à 0 °C et encore mieux, inférieure ou égale à - 20 °C. Ainsi, parmi les blocs A convenant pour la présente invention, le polyacrylate de méthyle a une Tg ≈ 5 °C, le polyacrylate d'éthyle a une Tg ≈ - 24 °C, le polyacrylate de butyle a une Tg = - 54 °C, le polyacrylate de 2-éthylhexyle a une Tg ≈ - 85 °C, le polyméthacrylate de 2-éthylhexyle a une Tg ≈ - 10 °C, le polyacrylate de benzyle a une Tg ≈ 6 °C, le polyacrylate de 2-phénoxyéthyle a une Tg ≈ - 3 °C, l'acrylate de 2-hydroxyéthyle a une Tg ≈ - 15 °C.

Le bloc B du copolymère à blocs de l'invention est hydrophile, c'est-à-dire, dans le cadre de la présente invention, qu'il peut absorber au moins 2 % de sa masse en eau, préférentiellement au moins 4 % en masse et mieux au moins 8 % de sa masse en eau. Une gamme optimale d'hydrophilie varie de 3 à 15 % en masse.

De préférence, le bloc B est un bloc homopolymère formé à partir d'un monomère hydrosoluble ou un bloc copolymère comprenant au moins une unité monomère hydrosoluble. Préférentiellement, le bloc B du copolymère à blocs de l'invention est un bloc thermoplastique, mieux un copolymère thermoplastique. Les blocs A et B doivent être choisis de telle sorte que le second matériau polymère comprenant au moins un copolymère à blocs comportant au moins les deux blocs polymériques A et B précédemment définis respecte au moins deux conditions, à savoir être initialement soluble dans la composition polymérisable thermodurcissable de l'invention et former, après polymérisation du mélange polymérisable de l'invention, des domaines riches en bloc élastomère A dispersés au sein du premier matériau, lesdits domaines étant de dimensions inférieures à 80 nanomètres, de préférence inférieures à 50 nanomètres.

Comme indiqué précédemment, le bloc B a une affinité avec la composition polymérisable thermodurcissable, permettant, à l'issue de la polymérisation du mélange polymérisable, d'obtenir une nano-structuration des blocs A du second matériau au sein de la matrice constituée par le premier matériau thermodurci. Le rôle du bloc compatible B ou "bloc stabilisant" est de stabiliser dans la matrice les domaines de blocs A, ou "blocs nano-structurants", au cours du durcissement.

De préférence, le bloc B est un bloc homopolymère formé à partir d'un monomère hydrosoluble ou un bloc

copolymère (statistique, alterné, à blocs ou greffé) comprenant au moins une unité monomère hydrosoluble. De tels blocs copolymères sont généralement choisis de façon à être hydrosolubles. Ces caractéristiques d'hydrophilie et d'hydrosolubilité ont une incidence favorable sur la solubilité du second matériau dans la composition polymérisable thermodurcissable de l'invention tout au long de la réaction de durcissement, dont il découle une non macro-séparation de phases. En d'autres termes, la présence d'une certaine proportion d'unités monomère hydrosolubles, de polarité élevée, dans le bloc B, rend ce bloc compatible avec le premier matériau thermodurci. Dans le cas où le bloc compatible B est un copolymère comprenant des unités monomères de nature chimique différentes, au moins l'une d'entre elles doit être responsable de la compatibilité avec le premier matériau thermodurci. Il s'agit d'une unité monomère hydrosoluble. De telles unités sont dites "unités monomères compatibles". Pour ce type de copolymères, il existe un pourcentage molaire en unité monomère compatible dit critique, au-delà duquel le bloc passe d'un statut de bloc incompatible au statut de bloc compatible. Il est à noter que selon le type de bloc A utilisé, la miscibilité initiale du copolymère à blocs dans le mélange polymérisable peut être modifiée. Dans le cas d'un bloc A initialement miscible dans le mélange polymérisable, on observe un phénomène de micro-séparation de phases en cours de polymérisation (les domaines élastomères de dimensions inférieures à 80 nm se forment en cours de réaction). Dans le cas d'un bloc A initialement immiscible dans le mélange polymérisable, les domaines de faibles dimensions sont déjà présents dans le mélange polymérisable avant le début de la polymérisation et sont stabilisés par les blocs B au cours de la réaction.

Des exemples non limitatifs d'unités monomères hydrosolubles utilisables dans la présente invention sont les unités (méth)acrylamide, les unités *N*-alkyl-(méth)acrylamide de faible masse moléculaire dont le groupe *N*-alkyle est substitué par un groupe hydroxyle, telles que le *N*-hydroxyéthylacrylamide, oxyde d'éthylène, acide 2-acrylamido-2-méthylpropanesulfonique, *N*-vinylpyrrolidin-2-one, *N*-vinylpyrrole, 2-vinyloxazoline, 2- et 4-vinylpyridine, 2-vinyl-4,4'-dialkyloxazolin-5-one, styrènesulfonate de sodium, vinylsulfonate de sodium, alcool allylique, chlorure de 3-triméthylammonium-2-hydroxypropyl-(méth)acrylate, (méth)acrylate de 2-aminoéthyle, (méth)acrylate de diméthylaminoéthyle, (méth)acrylamide de diméthylaminoéthyle, éventuellement quaternisés, (méth)acrylate de glycérol, *N*-(1,1-diméthyl-3-oxobutyl)acrylamide, les unités (méth)acrylate d'alkyle de faible masse moléculaire dont le groupe alkyle est substitué par un groupe hydroxyle, amino, *N*,*N*-dialkylamino, *N*-alkylamino, ou (polyalkyl)ammonium quaternaire, telles que le méthacrylate de 2-hydroxyéthyle ou l'acrylate de 4-hydroxybutyle, les unités acide carboxylique ayant un total de 3 à 5 atomes de carbone et porteurs d'un groupe vinyle, telles que l'acide (méth)acrylique, 2-méthacryloyloxy-éthyl-phosphorylcholine, carbamate de tris-(triméthylsiloxysilyl)-propylvinyle, des unités *N*,*N*-dialkyl(méth)acrylamide telles que le *N*,*N*-diméthylacrylamide, des unités *N*-alkyl(méth)acrylamide et (méth)acrylate éthoxylé telles que les 2-méthoxyéthyl (méth)acrylates, les unités éther de vinyle et d'alkyle dont le groupe alkyle est substitué par un groupe hydroxyle ou amino, les unités (métha)crylate de polyéthylèneglycol (PEG), avec la masse du groupe polyéthylène glycol variant de 400 g/mol à 10000 g /mol, et les unités (métha)crylate de polyéthylèneglycol monométhyléther. Les méthacrylates ou méthacrylamides ci-dessus peuvent être remplacés respectivement par des (groupe alkyle ou hydroxyalkyle inférieur) acrylates et des (groupe alkyle ou hydroxyalkyle inférieur)acrylamides si l'hydrosolubilité de ces derniers est suffisante pour conférer au copolymère à blocs de l'invention les propriétés souhaitées. Le bloc B peut être un bloc copolymère comprenant un mélange de ces unités monomères.

De préférence, le bloc B est choisi parmi les blocs homopolymères poly(*N*,*N*-diméthylacrylamide), poly(*N*-vinylpyrrolidin-2-one), poly(oxyde d'éthylène), les blocs copolymères comprenant des unités monomères *N*,*N*-diméthylacrylamide (DMA), les blocs copolymères comprenant des unités monomères *N*-vinylpyrrolidin-2-one (NVP), les blocs copolymères comprenant des unités monomères oxyde d'éthylène et les blocs copolymères comprenant des mélanges de ces unités monomères. Les unités monomères DMA, NVP et oxyde d'éthylène constituent effectivement les meilleures unités monomères compatibles avec le premier matériau thermodurci. Lorsque le bloc B est un bloc copolymère qui comprend un pourcentage molaire d'unités monomères hydrosolubles inférieur à 100 %, le complément à 100 % est préférentiellement représenté par des unités monomères telles que des unités (méth)acrylate d'alkyle. Ainsi, selon un mode de réalisation préféré, le bloc B est choisi parmi les blocs homopolymères poly(*N*,*N*-diméthylacrylamide) (PDMA), poly(*N*-vinylpyrrolidin-2-one), poly(oxyde d'éthylène), les blocs copolymères poly(*N*,*N*-diméthylacrylamide-co-méthacrylate de méthyle), poly(*N*-vinylpyrrolidin-2-one-co-méthacrylate de méthyle) et poly(oxyde d'éthylène-co-méthacrylate de méthyle). La proportion d'unités monomères hydrosolubles dans le bloc B, mais également les masses molaires relatives des blocs B et A jouent un rôle important en ce qui concerne l'évolution de la structuration du copolymère à blocs dans la formulation poly(thio)uréthane en cours de polymérisation, et donc influencent fortement la structure finale du matériau.

Le bloc B particulièrement préféré est un copolymère de méthacrylate de méthyle (MMA) et d'un monomère hydrosoluble.

La proportion de MMA peut être en moles de 10 à 95 % pour 90 à 5 % de monomère hydrosoluble.

De préférence, au moins 40 % molaire des unités monomères des blocs copolymères B sont des unités monomères hydrosolubles, qui sont choisies de préférence parmi les unités monomères *N*,*N*-diméthylacrylamide, les unités monomères *N*-vinylpyrrolidin-2-one, les unités monomères oxyde d'éthylène et leurs mélanges. Ce pourcentage correspond au pourcentage critique évoqué ci-dessus.

Il est particulièrement avantageux d'utiliser un bloc B dont la température de transition vitreuse (Tg) est supérieure ou égale à celle du premier matériau polymère thermodurci. Il en résultera un article transparent de Tg élevée. Plus celle-ci sera élevée, meilleures seront les propriétés thermomécaniques du matériau. Il est particulièrement avantageux d'utiliser un bloc B solubilisé dans les polythiols et/ou les polyols, préférentiellement les polythiols, de la composition polymérisable thermodurcissable, à une température qu'il est possible d'employer lors de l'étape de polymérisation. Cette caractéristique de solubilité a une incidence favorable sur la non macro-séparation de phases au cours de la réaction de polymérisation. Une proportion élevée dans le bloc B d'unités monomères hydrosolubles favorise la solubilité dans les polythiols.

De préférence, la fraction massique en B dans le copolymère à blocs de l'invention varie de 5 à 95% et mieux de 15 à 85%.

De préférence, le copolymère à blocs de l'invention est de type AB ou BAB. Par "copolymère à blocs de type BAB", on entend non seulement les copolymères dans lesquels les blocs de type B de chacune des deux extrémités sont identiques, mais aussi les copolymères dans lesquels les blocs de type B de chacune des deux extrémités sont différents, que ce soit en raison de leur masse ou de la nature et de l'enchaînement de leurs unités monomères. Les copolymères à blocs préférés pour l'invention sont les copolymères à blocs BAB dans lesquels A désigne un bloc poly (acrylate de 2-méthoxyéthyle) (PMEA), B désigne un bloc poly(*N*,*N*-diméthylacrylamide-co-méthacrylate de méthyle) comprenant un pourcentage molaire d'unités monomères *N*,*N*-diméthylacrylamide égal à 58 % et un pourcentage molaire d'unités monomères méthacrylate de méthyle (MMA) égal à 42 %. De préférence, la proportion molaire de bloc A par rapport au copolymère à blocs BAB ci-dessus est inférieure à 32 %. Parmi les copolymères à blocs poly[(DMA-co-MMA)-b-MEA-b-(DMA-co-MMA)] ci-dessus, celui qui est particulièrement préféré pour l'invention est commercialisé sous le nom DC 58 par Arkema. Son bloc stabilisant B est donc un copolymère statistique constitué d'entités méthacrylate de méthyle (42 % molaire) et d'un pourcentage élevé d'entités *N*,*N*-diméthylacrylamide (58 % molaire). Il est constitué de 31,1 % de bloc A PMEA et de 68,9 % de bloc B poly(DMA-co-MMA), ces proportions molaires ayant été déterminées par RMN.

Le copolymère à blocs de l'invention peut aussi être un copolymère tribloc BAC ou ACB, dans lequel A et B sont tels que définis précédemment et le bloc C est un PMMA homopolymère ou un polymère à base de monomères ou mélange de monomères vinyliques.

A titre d'exemples de blocs C, on peut citer ceux qui dérivent de composés vinyl aromatiques tels que le styrène, l'$\alpha$-méthyl styrène, les vinyl-toluènes, et ceux qui dérivent d'esters d'alkyle des acides acryliques et/ou méthacryliques ayant de 1 à 18 atomes de carbone dans la chaîne alkyle. Le tribloc BAC a une masse molaire moyenne en nombre qui peut être comprise entre 1000 et 500000 g/mol, de préférence entre 10000 g/mol et 500000 g/mol, et mieux comprise entre 20000 et 200000 g/mol.

Avantageusement, le tribloc BAC a les compositions suivantes, exprimées en fraction massique, le total étant 100 % :

B+C : entre 10 et 80 %, de préférence entre 15 et 70 %.
A : entre 90 et 20 %, et de préférence entre 85 et 30 %.

Les copolymères à blocs de la présente invention peuvent être fabriqués par polymérisation anionique, par exemple selon les procédés décrits dans les demandes de brevet EP 524054 et EP 749987.

B peut être fabriqué par tout moyen de polymérisation et en particulier par polymérisation radicalaire contrôlée. La polymérisation radicalaire contrôlée est connue. Les polymérisations radicalaires classiques ne permettent pas d'accéder à des polymères et copolymères à architecture contrôlée en raison notamment du faible temps de vie des radicaux, de leur réactivité élevée et du manque de stéréochimie des espèces intermédiaires. On entend par polymérisation radicalaire contrôlée une polymérisation radicalaire conventionnelle dans laquelle on effectue un contrôle d'au moins une des étapes choisies parmi l'amorçage, la propagation, la terminaison et le transfert. A titre d'exemple de contrôle on peut citer la désactivation réversible des macroradicaux en croissance. Cette désactivation réversible peut être provoquée par l'addition de nitroxydes dans le milieu de réaction. Un radical nitroxyde persistant est par exemple le TEMPO (2,2,6,6-tétraméthyl-1-pipéridinyloxy) qui capte les macroradicaux et conduit généralement à des homopolymères de polymolécularités très étroites, conférant ainsi un caractère vivant à la polymérisation radicalaire. On peut encore citer les molécules béta-phosphorylées et possédant un hydrogène en alpha de la fonction nitroxyde.

La présente invention concerne en outre un article transparent à ténacité améliorée fabriqué par polymérisation d'un mélange polymérisable selon l'invention, de préférence un article moulé transparent, dit "en verre poly(thio)uréthane". Ledit article comprend un alliage d'un premier matériau polymère thermodurci constituant la matrice dudit article (phase majoritaire de l'alliage), et d'un second matériau polymère dispersé au sein dudit premier matériau réticulé. Conformément à l'invention, le second matériau polymère forme des domaines riches en bloc élastomère A dispersés au sein du premier matériau, lesdits domaines étant de dimensions inférieures à 80 nanomètres, de préférence inférieures à 50 nanomètres.

Le second matériau polymère modifie les propriétés mécaniques et/ou optiques de la matrice poly(thio)uréthane, qui présente l'avantage de posséder simultanément des propriétés provenant de chacun des deux types de blocs. Ainsi, le module de conservation E' à 100 °C et la température de transition vitreuse de l'article de l'invention sont de préférence supérieurs à ceux du premier matériau polymère thermodurci. Le module de conservation E' est mesuré à l'aide d'un appareil Rheometrics Solid Analyser RSAII couramment utilisé pour caractériser les propriétés mécaniques dynamiques d'un matériau viscoélastique. L'appareil est utilisé en mode traction. Une déformation dynamique sinusoïdale de faible amplitude (on reste dans le domaine élastique linéaire du matériau) est appliquée sur l'échantillon. Cet essai donne accès au module de conservation (de l'énergie élastique) E' ainsi qu'au module de perte (visqueux) E". E' permet d'évaluer la capacité du matériau à se déformer sous l'effet d'une force appliquée. Dans la présente invention, E' est mesuré à 100 °C, une température atteinte à différents stades de fabrication du verre et lors d'éventuels traitements ultérieurs, par exemple la coloration et le vernissage. L'incorporation d'une quantité adéquate de copolymère à blocs selon l'invention, en particulier de copolymères à blocs de type BAB dont au moins 40 % molaire des unités monomères des blocs copolymères B sont choisies parmi les unités monomères DMA, NVP, oxyde d'éthylène et leurs mélanges, permet d'obtenir un module de conservation E' à 100 °C compris entre 30 et 300 MPa, préférentiellement entre 35 et 200 MPa.

En outre, le facteur critique d'intensité de contrainte $K_{Ic}$ de l'article de l'invention est supérieur à celui du premier matériau polymère thermodurci. Le facteur critique d'intensité de contrainte $K_{Ic}$, exprimé en $MPa.m^{1/2}$, est une mesure de la résistance à la rupture d'un matériau renfermant une fissure. Il a été déterminé par essai de traction sur des éprouvettes normalisées pré-fissurées par fatigue, selon le test ASTM E399 ou ASTM E 1820.

L'invention concerne également un article d'optique comprenant un substrat en verre organique, dont le substrat en verre organique est un article transparent selon l'invention. Ledit article d'optique est particulièrement adapté pour constituer une lentille ophtalmique. Cet article peut être un verre fini, c'est-à-dire un verre dont les deux surfaces optiques sont à la géométrie souhaitée en fin de moulage, ou bien un verre semi-fini, c'est-à-dire un verre dont une des faces possède déjà sa géométrie définitive et dont une des faces doit subir une opération de surfaçage à la géométrie définitive, ainsi que des opérations de doucissage et de polissage au moyen d'outils appropriés. Les articles obtenus selon l'invention sont transparents et possèdent une ténacité améliorée ($K_{Ic}$), dont découle une meilleure résistance aux chocs et à la propagation de fissures. Le matériau poly(thio)uréthane de l'invention est donc particulièrement adapté pour les montures percées, puisqu'il permet de limiter, voire de supprimer cette propagation de fissures, tant lors de l'opération de perçage que lors du port ultérieur de la monture.

Pour améliorer certaines propriétés de tels articles d'optique, par exemple des lentilles ophtalmiques dont le substrat est en verre organique, comme, entre autres, la résistance aux chocs, la résistance à l'abrasion et aux rayures, le caractère anti-réfléchissant et la résistance aux salissures, il est possible de former sur au moins une de leurs faces principales un ou plusieurs revêtements fonctionnels. Un inconvénient majeur des verres organiques, moins durs que les verres minéraux, est leur faible résistance aux rayures. Il est ainsi tout à fait classique de former successivement sur une face principale du substrat un premier revêtement, appelé primaire anti-choc, dont le but est d'accroître la résistance aux chocs de l'article et également l'adhésion au substrat de revêtements ultérieurs puis, sur ce revêtement de primaire anti-choc, un revêtement dur, généralement appelé revêtement anti-abrasion ou anti-rayures, dont le but est d'améliorer la capacité de la surface de l'article d'optique à résister aux endommagements dus à des agressions mécaniques. Vient se superposer au revêtement anti-abrasion un revêtement anti-reflet, auquel se superpose à son tour un revêtement anti-salissure, dont le rôle est de modifier la tension interfaciale entre la couche anti-reflet et l'eau ou la graisse (afin de diminuer leur adhérence), mais également d'obturer les interstices afin d'empêcher la graisse de s'infiltrer et de subsister.

L'invention concerne enfin un procédé de préparation d'un article transparent tel que précédemment défini. Le procédé de l'invention comprend au moins cinq étapes. La première consiste à solubiliser le second matériau comprenant au moins un copolymère à blocs dans les polythiols et/ou les polyols, préférentiellement les polythiols, en utilisant éventuellement un chauffage et une agitation. Les copolymères à blocs sont utilisés de préférence sous forme de poudre ou de granulés. La seconde étape consiste à ajouter les polyiso(thio)cyanates, éventuellement à chaud, à la solution homogène ainsi obtenue, et à homogénéiser le mélange polymérisable résultant. De préférence, une étape de dégazage de la solution obtenue à la première étape est effectuée avant la seconde étape, éventuellement sous vide et en chauffant. A l'issue du dégazage, une démixtion peut apparaître, formant deux phases, l'une riche en copolymère à blocs, l'autre riche en polythiol et/ou polyol. Cette étape de dégazage est relativement importante. En effet, les copolymères à blocs contenant des unités monomères hydrosolubles sont hygroscopiques. Le PDMA est lui-même un homopolymère très hygroscopique, contenant plusieurs % d'eau à l'état de poudre. Les fonctions iso(thio)cyanate étant réactives avec l'eau, la solubilisation de copolymères à blocs contenant un nombre élevé d'unités monomères hydrosolubles dans les polyiso (thio)cyanates conduit à une hydrolyse de certaines fonctions iso(thio)cyanate par l'eau contenue dans la poudre de copolymère à blocs (la solubilisation de la poudre de copolymère à blocs dans les polyiso(thio)cyanates peut durer ½ heure à 80 °C). S'ensuivent des problèmes de formation de bulles en cours de polymérisation et de stoechiométrie entre les fonctions SH et NCO. Le meilleur moyen de préparer la formulation est de solubiliser le copolymère à blocs dans

les polythiols et/ou les polyols, préférentiellement les polythiols, et de dégazer ce mélange binaire avant d'introduire les polyiso(thio)cyanates. L'ajout des polyiso(thio)cyanates à l'étape 2 réhomogénéise généralement la solution. A l'issue de cette phase, le mélange polymérisable peut être refroidi à la température ambiante. Lors de la troisième étape (moulage par coulée), un moule est rempli avec ce mélange polymérisable éventuellement refroidi, optionnellement filtré. Le moule peut être lui-même à la température ambiante, ou bien préalablement chauffé dans l'étuve dans laquelle va être effectuée la polymérisation. Pour des teneurs en copolymère à blocs inférieures ou égales à 10 % en masse dans le mélange polymérisable, il est possible de couler la solution lorsque celle-ci est à température ambiante (15-25 °C). Pour des teneurs supérieures à 10 % en masse, il est recommandé de préchauffer la solution. Généralement, une température de l'ordre de 90 °C convient parfaitement. Dans la quatrième étape, le mélange polymérisable est polymérisé, de préférence en le chauffant dans une étuve à une température comprise entre 80 et 140 °C, mieux entre 110 et 130 °C, jusqu'à obtention de l'article transparent. Bien qu'une simple activation thermique suffise, la réaction de polymérisation peut être activée en utilisant tout autre moyen approprié. Enfin, on procède au démoulage et à la récupération de l'article moulé transparent.

Les exemples suivants illustrent les mélanges polymérisables, les articles transparents et le procédé de l'invention, sans caractère limitatif.

Les figures 1 à 4 présentent des clichés d'observation en microscopie électronique à transmission (TEM, contraste naturel) d'échantillons de verre polythiouréthane préparés par polymérisation à 120°C lors d'expériences préliminaires visant à étudier le comportement au sein d'une matrice polythiouréthane non pas de copolymères à blocs, mais de "blocs" (co)polymères individuels (échelle : la totalité du trait (noir et blanc) représente 5 $\mu$m).

Les figures 5 et 6 présentent des clichés d'observation en microscopie électronique à transmission (TEM) d'échantillons de verre polythiouréthane préparés par polymérisation à 120°C respectivement dans les exemples 1 et 2 (échelle : la totalité du trait (noir et blanc) représente 200 nm), après marquage 15 minutes au tétraoxyde de ruthénium.

**Exemples**

Dans les exemples ci-dessous, les compositions polymérisables thermodurcissables sont des formulations polythiouréthane notées "formulations A", comprenant un mélange de polythiol de formule (II) et de diisocyanate de xylylène (rapport stoechiométrique SH/NCO = 1). Le "second matériau" utilisé dans les exemples est le copolymère à blocs DC 58 d'Arkema. Le poly(*N*,*N*-diméthylacrylamide) employé dans les expériences préliminaires a été fourni par Scientific Polymer Products. Ses caractéristiques sont les suivantes : Tg = 120 °C, $M_w$ = 100 000 g.mol$^{-1}$ (déterminée par chromatographie d'exclusion stérique dans l'eau en utilisant des standards polyoxyde d'éthylène).

Tout d'abord, un certain nombre d'expériences qui appuient les enseignements donnés dans la description ci-dessus vont être décrites.

<u>Etude de la compatibilité de blocs thermoplastiques et élastomères</u>

Après solubilisation de différents polymères thermoplastiques et/ou élastomères de masse molaire $M_n$ de l'ordre de 30 000 g/mol dans une formulation A thermodurcissable, la polymérisation est effectuée à 120 °C jusqu'à ce qu'elle soit complète (3 heures). Les polymères sont solubilisés à hauteur de 5 % et 15 % massique, par rapport à la masse du mélange polymérisable. L'augmentation de la masse molaire des chaînes polythiouréthane en croissance peut induire une macro-séparation de phases en cours de polymérisation, donc à des phases riches en thermoplastiques et/ou élastomères dispersées dans la matrice thermodurcie. Les mêmes comportements ont été observés pour les deux teneurs en polymères, 5 et 15 %.

<u>a. Etude du comportement de blocs de type incompatible</u>

Les comportements des homopolymères poly(méth)acrylate de méthyle (PMMA), poly(méth)acrylate de 2-phénoxyéthyle, poly(méth)acrylate de benzyle et poly(méth)acrylate de phényle en terme de miscibilité ont été évalués. Dans le polythiol de formule (II), ces comportements vont de la non miscibilité totale jusqu'à une miscibilité partielle seulement à haute température. L'ensemble de ces blocs homopolymères est initialement miscible pour toute température supérieure à la température ambiante dans des compositions polymérisables thermodurcissables comprenant un mélange de polythiol de formule (II) et de diisocyanate de xylylène (formulation A). Cependant, la polymérisation de mélanges polymérisables ainsi constitués conduit à une macro-séparation de phases en cours de réaction et à un matériau final totalement opaque. C'est pour cette raison que les huit blocs cités ci-dessus sont tous des blocs incompatibles avec le premier matériau thermodurci au sens de l'invention.

L'expérience 1 correspond à un mélange polymérisable comprenant 5 % massique, par rapport à la masse dudit mélange, de PMMA. La figure 1, associée à l'expérience 1, illustre la morphologie finale du système. La macro-séparation de phases engendre des particules de thermoplastique dispersées dans la matrice thermodurcie de taille

micrométrique.

b. Etude du comportement de blocs de type B compatibles

Les homopolymères hydrosolubles poly(*N*,*N*-diméthylacrylamide) (PDMA) et polyoxyde d'éthylène (POE) de masse molaire inférieure à 10000 g/mol sont totalement miscible dans le polythiol de formule (II), dans le diisocyanate de xylylène et dans les formulations A. De plus, ils restent totalement miscibles dans de telles compositions polymérisables thermodurcissables du début jusqu'à la fin de la réaction de polymérisation, conduisant à une structure homogène et un matériau transparent. Les blocs PDMA et POE sont donc des blocs compatibles avec le premier matériau thermodurci.

c. Etude de la compatibilité de blocs copolymères statistiques poly(MMA-co-DMA) (blocs de type B) : détermination du pourcentage molaire critique en unité monomère DMA

Le bloc homopolymère PMMA est incompatible avec le premier matériau thermodurci, contrairement au bloc PDMA qui lui est compatible avec la matrice polythiouréthane. Six copolymères statistiques poly(MMA-co-DMA) ont été préparés afin d'étudier leur compatibilité avec la matrice polythiouréthane.

Le tableau 1 permet d'observer qu'un pourcentage d'unités monomères DMA dans le copolymère statistique supérieur à 15 % est nécessaire pour obtenir la miscibilité du copolymère dans le réactif polythiol de formule (II). Il est à noter que ce pourcentage dépend de la masse molaire du bloc B, qui est ici de l'ordre de 30 000 g/mol (masse molaire en nombre). Au-delà de 15 % molaire d'unités monomères DMA, plus le pourcentage d'entités DMA dans le copolymère est important, plus la température à laquelle le copolymère statistique est miscible dans le polythiol de formule (II) est basse. Le comportement du mélange est de type UCST (upper critical solution temperature : miscibilité à haute température). Ainsi, considérant un copolymère contenant 57 % d'unités monomères DMA, la température critique de démixtion est d'environ 80 °C. Considérant un copolymère contenant 43 % d'unités monomères DMA, la température critique de démixtion est d'environ 135 °C. Considérant un copolymère contenant 25 % d'unités monomères DMA, la température critique de démixtion est d'environ 180 °C. Un copolymère contenant moins de 15 % d'unités monomères DMA est immiscible dans le polythiol de formule (II) pour toute température inférieure à 200 °C sur une large gamme de composition. En outre, un pourcentage molaire d'unités monomères DMA supérieur à 90 % dans le copolymère statistique est nécessaire pour obtenir une miscibilité du copolymère dans le polythiol de formule (II) pour toute température supérieure à 0 °C.

**Tableau 1**

| % molaire de DMA dans le copolymère statistique | Miscibilité du copolymère statistique | | |
|---|---|---|---|
| | Diisocyanate de xylylène | Polythiol de formule (II) | CPT |
| 0 (PMMA) | Miscible pour T > 20 °C | Immiscible pour T < 200 °C | Miscible pour T > 20 °C |
| 3,5 | Miscible pour T > 20 °C | Immiscible pour T < 200 °C | Miscible pour T > 20 °C |
| 7,5 | Miscible pour T > 20 °C | Immiscible pour T < 200 °C | Miscible pour T > 20 °C |
| 15 | Miscible pour T > 20 °C | Immiscible pour T < 200 °C | Miscible pour T > 20 °C |
| 25 | Miscible pour T > 20 °C | Miscible pour T > 180 °C | Miscible pour T > 20 °C |
| 43 | Miscible pour T > 20 °C | Miscible pour T > 135 °C | Miscible pour T > 20 °C |
| 57 | Miscible pour T > 20 °C | Miscible pour T > 80 °C | Miscible pour T > 20 °C |
| 100 (PDMA) | Miscible pour T > 20 °C | Miscible pour T > 20 °C | Miscible pour T > 20 °C |
| CPT : composition polymérisable thermodurcissable comprenant un mélange de polythiol de formule (II) et de diisocyanate de xylylène pour un rapport stoechiométrique SH/NCO = 1. La miscibilité dont il est question est la miscibilité initiale. | | | |

Les tableaux 1 et 2 montrent que la non-miscibilité de copolymères statistiques poly(MMA-co-DMA), autrement dit de blocs de type B, dans le polythiol de formule (II) entraîne une macro-séparation de phases au cours de la réaction de polymérisation. Le pourcentage critique d'unités monomères DMA dans le copolymère statistique nécessaire pour obtenir une miscibilité totale de ce copolymère dans une formulation polythiouréthane comprenant un mélange de polythiol de formule (II) et de diisocyanate de xylylène du début à la fin de la réaction de polymérisation est, d'après le

tableau 2, 40 %, pour une température de polymérisation de 120°C.

**Tableau 2**

| % molaire de DMA dans le copolymère statistique | Phénomène | Transparence |
|---|---|---|
| 0 (PMMA) | Macro-séparation de phases | Non |
| 3,5 | Macro-séparation de phases | Non |
| 7,5 | Macro-séparation de phases | Non |
| 15 | Macro-séparation de phases | Non |
| 25 | Macro-séparation de phases | Non |
| 43 | Miscibilité totale | Oui |
| 57 | Miscibilité totale | Oui |
| 100 (PDMA) | Miscibilité totale | Oui |

Les expériences 2, 3 et 4 correspondent à des mélanges polymérisables comprenant 5 % massique, par rapport à la masse dudit mélange, d'un copolymère poly(DMA-co-MMA), ledit copolymère contenant respectivement 7,5 %, 15 % et 25 % molaires d'unités monomères DMA.

Les figures 2 à 4, associées aux expériences 2 à 4, illustrent la morphologie finale de systèmes ayant une teneur de 5 % massique en copolymère thermoplastique contenant moins de 40 % molaire d'unités monomères DMA. La macro-séparation de phases engendre des particules de thermoplastique dispersées dans la matrice thermodurcie, dont la taille diminue en fonction de la quantité d'unités monomères DMA dans le copolymère statistique. En utilisant un copolymère contenant 43 % molaire d'unités monomères DMA, aucune macro-séparation de phases n'est observée : le copolymère statistique est totalement miscible dans la matrice polythiouréthane jusqu'à la fin de la réaction. Ces observations sont confirmées par les données thermomécaniques.

Mode opératoire pour la préparation des articles transparents de l'invention

Le copolymère à blocs DC 58 est introduit sous forme de granulés dans le polythiol de formule (II) puis chauffé à 130 °C sous agitation jusqu'à solubilisation totale et obtention d'une solution transparente. Celle-ci est dégazée sous vide pendant ½ heure à 110 °C, ce qui produit une démixtion. Deux phases apparaissent, l'une riche en DC 58, l'autre riche en trithiol de formule (II). Une quantité stoechiométrique de diisocyanate de xylylène est ajoutée à ce mélange à la (rapport molaire NCO / SH = 1) à 110 °C. Le mélange est maintenu à 110°C, lequel redevient homogène. Il est agité pendant 5 minutes à 80 °C, puis refroidi à 20 °C. La solution, à 20 °C (pour des concentrations de copolymère à blocs inférieures ou égales à 10 % en masse par rapport à la masse du mélange polymérisable) ou préchauffée (pour des concentrations de copolymère à blocs supérieures à 10 % en masse par rapport à la masse du mélange polymérisable), est ensuite versée dans un moule, lui-même à température ambiante, ou préalablement chauffé dans l'étuve dans laquelle la polymérisation va être effectuée. Enfin, le mélange polymérisable est polymérisé à 120 °C pendant quatre heures dans une étuve.

Dans l'exemple 1, le mélange polymérisable comprend la formulation A et 5 % en masse de DC 58 d'Arkema, par rapport à la masse du mélange polymérisable. Dans l'exemple 2, le mélange polymérisable comprend la formulation A et 15 % en masse de DC 58 d'Arkema, par rapport à la masse du mélange polymérisable. Dans l'exemple comparatif C1, le mélange polymérisable comprend uniquement la formulation A (matrice pure).

Il est à noter que le copolymère à blocs de type BAB DC 58, à 5 et 15 % en masse, est totalement miscible dans le diisocyanate de xylylène et totalement miscible dans le polythiol de formule (II) pour toute température supérieure à 120 °C. La proportion d'unités monomères DMA dans le bloc B, mais également les masses molaires relatives des blocs B et A jouent un rôle primordial sur la miscibilité du copolymère à blocs dans le polythiol de formule (II).

Amélioration des propriétés de résistance à la propagation de fissure et de Tg

Le tableau 3 illustre l'intérêt de l'invention. Il montre tout d'abord que l'incorporation à une matrice polythiouréthane d'un copolymère à blocs selon l'invention améliore les propriétés de résistance à la propagation de fissure de ladite matrice, mesurées par le facteur critique d'intensité de contrainte $K_{Ic}$. Cette amélioration ne se fait pas au détriment de la température de transition vitreuse du matériau (Tg), bien au contraire. L'augmentation de la ténacité s'accompagne en effet d'une augmentation de Tg, déterminée par analyse DSC, ce qui est dû au fait que le bloc B a une Tg supérieure

à celle de la matrice thermodurcie. Ces deux améliorations sont d'autant plus importantes que la teneur en copolymère à blocs DC 58 est élevée.

Augmentation du module de conservation E' à 100 °C

Le tableau 3 montre que l'augmentation de Tg induit également une augmentation du module E' à 100 °C par rapport à la matrice pure (C1), ce qui est un autre avantage des articles transparents de l'invention.

**Tableau 3**

| Exemple | $K_{Ic}$(MPa.m$^{1/2}$) | E' à 100 °C (MPa) | Tg (°C) |
|---|---|---|---|
| C1 (matrice pure) | 0,91 | 21 | 83 |
| 1 | 1,18±0.18 | | 86 |
| 2 | 1,35 ± 0.11 | 38 | 92 |

Morphologie

Les figures 5 et 6 montrent que la polymérisation de mélanges polymérisables selon l'invention, contenant respectivement 5 et 15 % en masse d'un copolymère tribloc de type BAB de l'invention conduit à la formation de domaines élastomères dans le matériau final, observables par microscopie électronique à transmission. Ces domaines présents dans la matrice polythiouréthane sont de faibles dimensions (de l'ordre de 20 nm), et correspondent à des particules riches en bloc A PMEA (confirmé par analyse thermomécanique), stabilisées par les blocs B constitués de copolymères statistiques d'unités monomères MMA et DMA totalement miscibles dans la matrice.

**Revendications**

**1.** Mélange polymérisable liquide comprenant :

(a) une composition polymérisable thermodurcissable précurseur par polymérisation d'un premier matériau polymère thermodurci,
(b) un second matériau polymère solubilisé dans ladite composition polymérisable thermodurcissable,

**caractérisé en ce que** la composition polymérisable thermodurcissable comprend au moins un polythiol et/ou au moins un polyol, préférentiellement au moins un polythiol, et au moins un polyiso(thio)cyanate, et **en ce que** le second matériau :

- comprend au moins un copolymère à blocs comprenant au moins deux blocs polymériques A et B, ledit bloc A étant un bloc élastomère et ledit bloc B étant un bloc hydrophile ;
- forme, après polymérisation du mélange polymérisable, des domaines riches en bloc élastomère A dispersés au sein du premier matériau, lesdits domaines étant de dimensions inférieures à 80 nanomètres, de préférence inférieures à 50 nanomètres.

**2.** Mélange polymérisable selon la revendication 1, **caractérisé en ce que** le bloc B est capable d'absorber au moins 2 % de sa masse en eau, et de préférence de 3 à 15 % de sa masse en eau.

**3.** Mélange polymérisable selon la revendication 1 ou 2, **caractérisé en ce que** le bloc B est un bloc homopolymère formé à partir d'un monomère hydrosoluble ou un bloc copolymère comprenant au moins une unité monomère hydrosoluble.

**4.** Mélange polymérisable selon l'une quelconque des revendications précédentes, **caractérisé en ce que** le bloc B est un bloc thermoplastique.

**5.** Mélange polymérisable selon l'une quelconque des revendications précédentes, **caractérisé en ce que** le bloc B est choisi parmi les blocs homopolymères poly(*N*,*N*-diméthylacrylamide), poly(*N*-vinylpyrrolidin-2-one), poly(oxyde d'éthylène), les blocs copolymères comprenant des unités monomères *N*,*N*-diméthylacrylamide, les blocs copolymères comprenant des unités monomères *N*-vinylpyrrolidin-2-one, les blocs copolymères comprenant des unités monomères oxyde d'éthylène et les blocs copolymères comprenant des mélanges de ces unités monomères.

6. Mélange polymérisable selon l'une quelconque des revendications précédentes, **caractérisé en ce que** le bloc B est choisi parmi les blocs homopolymères poly(*N*,*N*-diméthylacrylamide), poly(*N*-vinylpyrrolidin-2-one), poly(oxyde d'éthylène), les blocs copolymères poly(*N*,*N*-diméthylacrylamide-co-méthacrylate de méthyle), poly(*N*-vinylpyrrolidin-2-one-co-méthacrylate de méthyle) et poly(oxyde d'éthylène-co-méthacrylate de méthyle).

7. Mélange polymérisable selon l'une quelconque des revendications 5 et 6, **caractérisé en ce qu'**au moins 40 % molaire des unités monomères des blocs copolymères B sont des unités monomères hydrosolubles, préférentiellement choisies parmi les unités monomères *N*,*N*-diméthylacrylamide, les unités monomères *N*-vinylpyrrolidin-2-one, les unités monomères oxyde d'éthylène et leurs mélanges.

8. Mélange polymérisable selon l'une quelconque des revendications précédentes, **caractérisé en ce que** le bloc A est incompatible avec le premier matériau thermodurci.

9. Mélange polymérisable selon l'une quelconque des revendications précédentes, **caractérisé en ce que** le bloc B est compatible avec le premier matériau thermodurci.

10. Mélange polymérisable selon l'une quelconque des revendications précédentes, **caractérisé en ce que** le bloc A est un bloc élastomère thermoplastique.

11. Mélange polymérisable selon l'une quelconque des revendications précédentes, **caractérisé en ce que** la température de transition vitreuse du bloc A est inférieure ou égale à 20 °C.

12. Mélange polymérisable selon la revendication 11, **caractérisé en ce que** la température de transition vitreuse du bloc A est inférieure ou égale à 0 °C.

13. Mélange polymérisable selon l'une quelconque des revendications précédentes, **caractérisé en ce que** la température de transition vitreuse du bloc B est supérieure ou égale à celle du premier matériau polymère thermodurci.

14. Mélange polymérisable selon l'une quelconque des revendications précédentes, **caractérisé en ce que** le bloc A est un bloc homopolymère ou copolymère comprenant au moins une unité monomère, ladite unité monomère étant choisie parmi l'acrylate de 2-méthoxyéthyle, l'acrylate de butyle, l'acrylate de méthyle, l'acrylate de benzyle et l'acrylate de 2-phénoxyéthyle.

15. Mélange polymérisable selon l'une quelconque des revendications précédentes, **caractérisé en ce que** le bloc B est solubilisé dans les polythiols et/ou les polyols, préférentiellement les polythiols, de la composition polymérisable thermodurcissable.

16. Mélange polymérisable selon l'une quelconque des revendications précédentes, **caractérisé en ce que** le copolymère à blocs est de type AB ou BAB.

17. Mélange polymérisable selon l'une quelconque des revendications précédentes, **caractérisé en ce que** le copolymère à blocs est un copolymère à blocs BAB dans lequel A désigne un bloc poly(acrylate de 2-méthoxyéthyle), B désigne un bloc poly(*N*,*N*-diméthylacrylamide-co-méthacrylate de méthyle) comprenant un pourcentage molaire d'unités monomères *N*,*N*-diméthylacrylamide égal à 58 % et un pourcentage molaire d'unités monomères méthacrylate de méthyle égal à 42 %.

18. Mélange polymérisable selon la revendication 17, **caractérisé en ce que** la proportion molaire de bloc A par rapport au copolymère à blocs BAB est inférieure à 32 %.

19. Mélange polymérisable selon l'une quelconque des revendications précédentes, **caractérisé en ce que** le copolymère à blocs a une masse molaire moyenne en nombre variant de 10000 à 500000 g/mol, de préférence de 20000 à 200000 g/mol.

20. Mélange polymérisable selon l'une quelconque des revendications précédentes, **caractérisé en ce que** le second matériau représente jusqu'à 50 % de la masse du mélange polymérisable.

**21.** Mélange polymérisable selon la revendication 20, **caractérisé en ce que** le second matériau représente de 5 à 15 % de la masse du mélange polymérisable.

**22.** Mélange polymérisable selon l'une quelconque des revendications précédentes, **caractérisé en ce que** la composition polymérisable thermodurcissable représente de 70 à 95 % de la masse du mélange polymérisable.

**23.** Mélange polymérisable selon l'une quelconque des revendications précédentes, **caractérisé en ce que** le (ou les) polythiol(s) répond(ent) à la formule (I) :

$$R^1(SH)_{n1} \qquad (I)$$

dans laquelle n1 désigne un nombre entier allant de 2 à 6 et $R^1$ désigne un radical aliphatique, alicyclique, hétérocyclique ou aromatique dont la valence est égale à n1.

**24.** Mélange polymérisable selon l'une quelconque des revendications précédentes, **caractérisé en ce que** le (ou les) polythiol(s) est (sont) choisi(s) parmi le pentaérythritol tris(3-mercaptopropionate), le pentaérythritol tétrakis(thioglycolate), le triméthylolpropane tris(3-mercaptopropionate), le triméthylolpropane tris(mercaptoacétate) et les composés de formules (II) et (Va) :

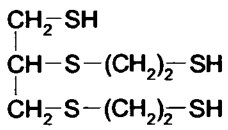
(II)

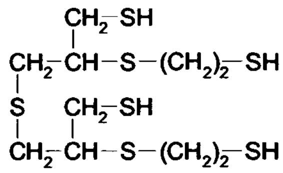
(Va)

**25.** Mélange polymérisable selon l'une quelconque des revendications précédentes, **caractérisé en ce que** le (ou les) polythiol(s) répond(ent) à la formule (II) :

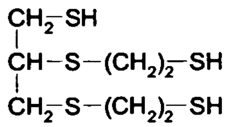
(II)

**26.** Mélange polymérisable selon l'une quelconque des revendications précédentes, **caractérisé en ce que** le (ou les) polyiso(thio)cyanate(s) répond(ent) à la formule (VI) :

$$R^2(N{=}C{=}X)_{n2} \qquad (VI)$$

dans laquelle X représente un atome d'oxygène ou de soufre, n2 désigne un nombre entier allant de 2 à 6 et $R^2$ désigne un radical aliphatique, alicyclique, hétérocyclique ou aromatique dont la valence est égale à n2.

**27.** Mélange polymérisable selon l'une quelconque des revendications précédentes, **caractérisé en ce que** le (ou les) polyiso(thio)cyanate(s) est (sont) choisi(s) parmi les diiso(thio)cyanates de tolylène, les diiso(thio)cyanates de phénylène, les diiso(thio)cyanates d'éthylphénylène, les diiso(thio)cyanates d'isopropylphénylène, les diiso(thio)cyanates de xylylène, les diiso(thio)cyanates de diéthylphénylène, les diiso(thio)cyanates de diisopropylphénylène, les diiso(thio)cyanates de naphtalène, le diiso(thio)cyanate d'isophorone, le diiso(thio)cyanate d'hexaméthylène, les bis (iso(thio)cyanatométhyl)-cyclohexanes, les triiso(thio)cyanates de triméthylbenzène, les triiso(thio)cyanato-benzènes, les (4,4'-diiso(thio)cyanato-diphényl)-méthanes, les (4,4'-diiso(thio)cyanato-dicyclohexyl)-méthanes, et les composés de formules (VII), (VIII), (IX), (X) et (XI) :

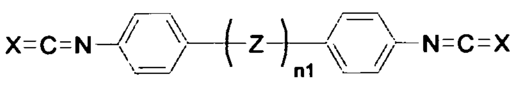

(VII)

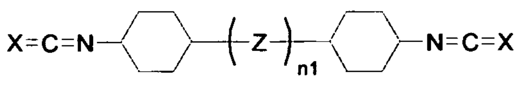

(VIII)

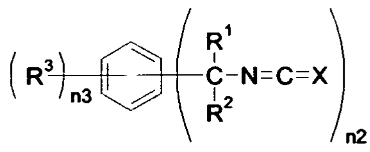

(IX)

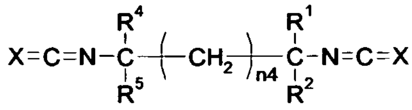

(X)

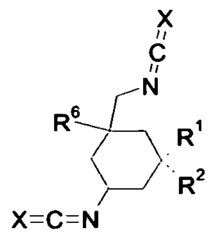

(XI)

dans lesquelles n1 est égal à 0 ou 1, n2 est un nombre entier allant de 2 à 4, n3 est un nombre entier allant de 1 à 4, la somme $n2 + n3 \leq 6$, n4 est un nombre entier allant de 1 à 10, X désigne O ou S, Z désigne O, S, Se, NH, C=O, SO, $SO_2$, $SeO_2$, $CH_2$, -CH=CH- ou $-C(R)_2-$ avec R représentant un atome d'hydrogène ou un radical alkyle en $C_1$-$C_6$, $R^1$, $R^2$, $R^4$, $R^5$, $R^6$ désignent indépendamment les uns des autres un atome d'hydrogène ou un radical alkyle en $C_1$-$C_6$, $R^3$ désigne un atome d'hydrogène, un atome d'halogène, ou un radical alkyle en $C_1$-$C_6$.

**28.** Mélange polymérisable selon l'une quelconque des revendications précédentes, **caractérisé en ce que** le (ou les) polyiso(thio)cyanate(s) est (sont) choisi(s) parmi les diisocyanates de xylylène.

**29.** Mélange polymérisable selon l'une quelconque des revendications précédentes, **caractérisé en ce que** la composition polymérisable thermodurcissable comprend au moins un polythiol et au moins un polyisocyanate.

**30.** Article transparent à ténacité améliorée comprenant un alliage d'un premier matériau polymère thermodurci constituant la matrice dudit article, et d'un second matériau polymère dispersé au sein dudit premier matériau, **caractérisé en ce qu'**il est fabriqué par polymérisation d'un mélange polymérisable selon l'une quelconque des revendications 1 à 29.

**31.** Article transparent selon la revendication 30, **caractérisé en ce que** le facteur critique d'intensité de contrainte dudit article est supérieur à celui du premier matériau polymère thermodurci.

**32.** Article transparent selon l'une quelconque des revendications 30 et 31, **caractérisé en ce que** la température de transition vitreuse dudit article est supérieure à celle du premier matériau polymère thermodurci.

**33.** Article transparent selon l'une quelconque des revendications 30 à 32, **caractérisé en ce que** le module de conservation à 100 °C dudit article est supérieur à celui du premier matériau polymère thermodurci.

**34.** Article transparent selon l'une quelconque des revendications 30 à 33, **caractérisé en ce qu'**il est moulé.

**35.** Article d'optique comprenant un article transparent selon l'une quelconque des revendications 30 à 34 en tant que substrat en verre organique.

**36.** Article d'optique selon la revendication 35, **caractérisé en ce que** ledit article est une lentille ophtalmique.

**37.** Procédé de préparation d'un article transparent selon l'une quelconque des revendications 30 à 34 comprenant au moins les étapes suivantes :

i) solubiliser le second matériau dans les polythiols et/ou les polyols, préférentiellement les polythiols ;
ii) ajouter les polyiso(thio)cyanates à la solution obtenue à l'étape i) et homogénéiser le mélange polymérisable résultant ;
iii) remplir un moule avec le mélange polymérisable obtenu à l'étape ii) ;
iv) polymériser le mélange polymérisable obtenu à l'étape iii) jusqu'à obtention dudit article ; et
v) récupérer l'article transparent après démoulage.

**38.** Procédé selon la revendication 37, **caractérisé en ce qu'**il comprend avant l'étape ii) une étape de dégazage de la solution obtenue à l'étape i).

## Claims

**1.** A liquid polymerizable mixture comprising:

(a) a thermosetting polymerizable composition, which is the precursor, by polymerization, of a first thermoset polymer material,
(b) a second polymer material solubilized in said thermosetting polymerizable composition,

wherein the thermosetting polymerizable composition comprises at least one polythiol and/or at least one polyol, preferably at least one polythiol, and at least one polyiso(thio)cyanate, and wherein the second material:

- comprises at least one block copolymer comprising at least two polymer blocks A and B, said block A being an elastomer block and said block B being a hydrophilic block;
- forms, after polymerization of the polymerizable mixture, elastomer block A-rich areas dispersed within the first material, the area sizes being of less than 80 nanometres, preferably of less than 50 nanometres.

**2.** A polymerizable mixture according to claim 1, wherein the block B is able to absorb an amount of water of at least 2% of its weight, and preferably from 3 to 15% of its weight.

**3.** A polymerizable mixture according to claim 1 or 2, wherein the block B is a block homopolymer formed from a water-soluble monomer or a block copolymer comprising at least one water-soluble monomer unit.

**4.** A polymerizable mixture according to any one of preceding claims, wherein the block B is a thermoplastic block.

**5.** A polymerizable mixture according to any one of preceding claims, wherein the block B is selected from poly(*N*,*N*-dimethyl acrylamide), poly(*N*-vinylpyrrolidin-2-one), poly(ethylene oxide) block homopolymers, block copolymers comprising *N*,*N*-dimethyl acrylamide monomer units, block copolymers comprising *N*-vinylpyrrolidin-2-one monomer units, block copolymers comprising ethylene oxide monomer units and block copolymers comprising mixtures of these monomer units.

**6.** A polymerizable mixture according to any one of preceding claims, wherein the block B is selected from poly(*N*,*N*-dimethyl acrylamide), poly(*N*-vinylpyrrolidin-2-one), poly(ethylene oxide) block homopolymers, poly(*N*,*N*-dimethyl acrylamide-co-methyl methacrylate), poly(*N*-vinylpyrrolidin-2-one-co-methyl methacrylate) and poly(ethylene oxide-co-methyl methacrylate) block copolymers.

**7.** A polymerizable mixture according to any one of claims 5 and 6, wherein at least 40 mol. % of the monomer units of the block copolymers B are water-soluble monomer units, preferably selected from *N*,*N*-dimethyl acrylamide monomer units, *N*-vinylpyrrolidin-2-one monomer units, ethylene oxide monomer units and mixtures thereof.

**8.** A polymerizable mixture according to any one of preceding claims, wherein the block A is not compatible with the first thermoset material.

**9.** A polymerizable mixture according to any one of preceding claims, wherein the block B is compatible with the first thermoset material.

**10.** A polymerizable mixture according to any one of preceding claims, wherein the block A is a thermoplastic elastomer block.

**11.** A polymerizable mixture according to any one of preceding claims, wherein the glass transition temperature of the block A is lower than or equal to 20°C.

**12.** A polymerizable mixture according to claim 11, wherein the glass transition temperature of the block A is lower than or equal to 0°C.

13. A polymerizable mixture according to any one of preceding claims, wherein the glass transition temperature of the block B is higher than or equal to that of the first thermoset polymer material.

14. A polymerizable mixture according to any one of preceding claims, wherein the block A is a block homopolymer or copolymer comprising at least one monomer unit, said monomer unit being selected from 2-methoxyethyl acrylate, butyl acrylate, methyl acrylate, benzyl acrylate and 2-phenoxyethyl acrylate.

15. A polymerizable mixture according to any one of preceding claims, wherein the block B is solubilized in the polythiols and/or the polyols, preferably the polythiols, of the thermosetting polymerizable composition.

16. A polymerizable mixture according to any one of preceding claims, wherein the block copolymer is of AB or BAB type.

17. A polymerizable mixture according to any one of preceding claims, wherein the block copolymer is a BAB block copolymer, wherein A represents a 2-methoxyethyl poly(acrylate) block, B represents a poly(*N*,*N*-dimethyl acrylamide-co-methyl methacrylate) block comprising a molar percentage of *N*,*N*-dimethyl acrylamide monomer units of 58% and a molar percentage of methyl methacrylate monomer units of 42%.

18. A polymerizable mixture according to claim 17, wherein the molar amount of block A as compared to BAB block copolymer is lower than 32%.

19. A polymerizable mixture according to any one of preceding claims, wherein the block copolymer has a number average molecular weight ranging from 10000 to 500000 g/mol, preferably from 20000 to 200000 g/mol.

20. A polymerizable mixture according to any one of preceding claims, wherein the second material represents up to 50% by weight of the polymerizable mixture.

21. A polymerizable mixture according to claim 20, wherein the second material represents from 5 to 15% by weight of the polymerizable mixture.

22. A polymerizable mixture according to any one of preceding claims, wherein the thermosetting polymerizable composition represents from 70 to 95% by weight of the polymerizable mixture.

23. A polymerizable mixture according to any one of preceding claims, wherein the polythiol(s) has or have the formula (I):

$$R^1(SH)_{n1} \qquad (I)$$

wherein n1 represents an integer ranging from 2 to 6 and $R^1$ represents an aliphatic, alicyclic, heterocyclic or aromatic radical, the valence of which is n1.

24. A polymerizable mixture according to any one of preceding claims, wherein the polythiol(s) is or are selected from tris(3-mercaptopropionate) pentaerythritol, tetrakis(thioglycolate) pentaerythritol, tris(3-mercaptopropionate) trimethylolpropane, tris(mercaptoacetate) trimethylolpropane and compounds of formulas (II) and (Va):

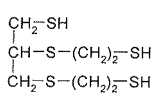 (II) 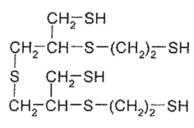 (Va)

25. A polymerizable mixture according to any one of preceding claims, wherein the polythiol(s) has or have the formula (II):

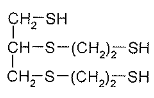 (II)

26. A polymerizable mixture according to any one of preceding claims, wherein the polyiso(thio)cyanate(s) has or have the formula (VI):

$R^2(N{=}C{=}X)_{n2}$ (VI)

wherein X represents an oxygen or a sulfur atom, n2 represents an integer ranging from 2 to 6 and $R^2$ represents an aliphatic, alicyclic, heterocyclic or aromatic radical, the valence of which corresponds to n2.

**27.** A polymerizable mixture according to any one of preceding claims, wherein the polyiso(thio)cyanate(s) is or are selected from tolylene diiso(thio)cyanates, phenylene diiso(thio)cyanates, ethylphenylene diiso(thio)cyanates, isopropylphenylene diiso(thio)cyanates, xylylene diiso(thio)cyanates, diethylphenylene diiso(thio)cyanates, diisopropylphenylene diiso(thio)cyanates, naphtalene diiso(thio)cyanates, isophorone diiso(thio)cyanate, hexamethylene diiso(thio)cyanate, bis (iso(thio)cyanatomethyl)-cyclohexanes, trimethylbenzene triiso(thio)cyanates, triiso(thio)cyanato-benzenes, (4,4'-diiso(thio)cyanato-diphenyl)-methanes, (4,4'-diiso(thio)cyanato-dicyclohexyl)-methanes, and compounds of formulas (VII), (VIII), (IX), (X) and (XI):

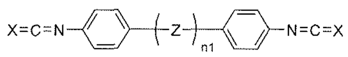

(VII)

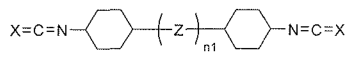

(VIII)

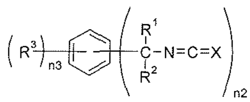

(IX)

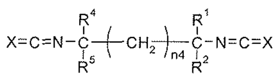

(X)

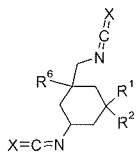

(XI)

wherein n1 is 0 or 1, n2 is an integer ranging from 2 to 4, n3 is an integer ranging from 1 to 4, the sum of n2 + n3 $\leq$ 6, n4 is an integer ranging from 1 to 10, X represents O or S, Z represents O, S, Se, NH, C=O, SO, $SO_2$, $SeO_2$, $CH_2$, -CH=CH- or $-C(R)_2-$ with R representing a hydrogen atom or a $C_1$-$C_6$ alkyl radical, $R^1$, $R^2$, $R^4$, $R^5$, $R^6$ independently from each other represent a hydrogen atom or a $C_1$-$C_6$ alkyl radical, $R^3$ represents a hydrogen atom, a halogen atom, or a $C_1$-$C_6$ alkyl radical.

**28.** A polymerizable mixture according to any one of preceding claims, wherein the polyiso(thio)cyanate(s) is or are selected from xylylene diisocyanates.

**29.** A polymerizable mixture according to any one of preceding claims, wherein the thermosetting polymerizable composition comprises at least one polythiol and at least one polyisocyanate.

**30.** A transparent article having an improved toughness comprising an alloy consisting in a first thermoset polymer material that is the matrix of said article, and in a second polymer material dispersed within said first material, **characterized in that** it is prepared by polymerizing a polymerizable mixture according to any one of claims 1 to 29.

**31.** A transparent article according to claim 30, wherein the stress intensity critical factor of said article is higher than that of the first thermoset polymer material.

**32.** A transparent article according to any one of claims 30 and 31, wherein the glass transition temperature of said article is higher than that of the first thermoset polymer material.

**33.** A transparent article according to any one of claims 30 to 32, wherein the storage modulus at 100°C of said article is higher than that of the first thermoset polymer material.

**34.** A transparent article according to any one of claims 30 to 33, **characterized in that** it is molded.

**35.** An optical article comprising a transparent article according to any one of claims 30 to 34 as an organic glass substrate.

**36.** An optical article according to claim 35, said article being an ophthalmic lens.

**37.** A method for making a transparent article according to any one of claims 30 to 34 comprising at least the steps of:

i) solubilizing the second material in the polythiols and/or the polyols, preferably the polythiols;
ii) adding the polyiso(thio)cyanate to the solution obtained in step i) and homogenizing the resulting polymerizable mixture;
iii) filling a mold with the polymerizable mixture obtained in step ii);
iv) polymerizing the polymerizable mixture obtained in step iii) until said article is obtained; and
v) recovering the transparent article after the mold removal.

**38.** A method according to claim 37, comprising, prior to step ii), a step of degassing the solution obtained in step i).

**Patentansprüche**

**1.** Flüssige polymerisierbare Mischung umfassend:

i) eine polymerisierbare heisshärtenden Vorläuferzusammensetzung zur Polymerisierung eines ersten heisshärtendenden polymerisierbaren Materials
ii) ein zweites polymerisierbares Material das in besagter heisshärtender polymerisierbaren Zusammensetzung gelöst ist,

**dadurch gekennzeichnet, dass** die beisshärtende polymerisierbare Zusammensetzung wenigstens ein Polytbiol und/oder wenigstens ein Polyol, bevorzugt wenigstens ein Polythiol, und wenigstens ein Polyiso(thio)cyanat enthält, und dass das zweite Material:

- wenigstens ein Blockcopolymer enthält, umfassend wenigstens zwei Blockpolymere A und B, wobei besagter Block A ein Blockelastomer ist und besagter Block B ein hydrophiler Block ist;
- nach der Polymerisierung der polymerisierbaren Mischung gesättigte Bereiche im Blockelastomer A bildet, die innerhalb des ersten Materials verteilt sind, wobei besagte Bereiche eine Dimension unterhalb von 80 Nanometer haben, bevorzugt unterhalb von 50 Nanometer.

**2.** Polymerisierbare Mischung nach Anspruch 1, **dadurch gekennzeichnet, dass** der Block B zur Aufnahme von wenigstens 2 % Wasser in Bezug auf seine Masse geeignet ist, vorzugsweise von 3 bis 15 % seiner Masse.

**3.** Polymerisierbare Mischung nach einem der Ansprüche 1 oder 2, **dadurch gekennzeichnet, dass** der Block B ein homopolymerer Block ist, der teilweise ein wasserlösliche Monomer bildet oder ein Blockcopolymer umfassend wenigstens eine Einheit eines wasserlöslichen Monomers.

**4.** Polymerisierbare Mischung nach einem der vorhergehenden Ansprüche, **dadurch gekennzeichnet, dass** der Block B ein thermoplastischer Block ist.

**5.** Polymerisierbare Mischung nach einem der vorhergehenden Ansprüche, **dadurch gekennzeichnet, dass** der Block 13 ausgewählt ist aus den homopolymeren Blöcken Poly(N,N-dimethylacrylamid), Poly(N-vinylpyrrolidin-2-on), Poly(Ethylenoxid), den Blockcopolymeren umfassend monomere N,N-dimethylacrylamid Einheiten, den Blockcopolymeren umfassend monomere N-vinylpyrrolidin-2-on Einheiten, den Blockcopolymeren umfassend monomere Ethylenoxid-Einheiten und den Blockpolymeren umfassend eine Mischung dieser monomeren Einheiten.

**6.** Polymerisierbare Mischung nach einem der vorhergehenden Ansprüche, **dadurch gekennzeichnet, dass** der Block B ausgewählt ist aus den homopolymeren Blöcken Poly(N,N-dimethylacrylamid), Poly(N-vinylpyrrolidin-2-on), Poly(Ethylenoxid), den Blockcopolymeren Poly(N,N-dimethylacrylamid-co-methylmethacrylat), Poly(N-vinylpyrrolidin-2-on-co-methylmethacrylat)und Poly(Ethylenoxid-co-methylmethacrylat).

**7.** Polymerisierbare Mischung nach einem der vorhergehenden Ansprüche, **dadurch gekennzeichnet, dass** wenigstens 40 Mol.% der monomeren Einheiten der Blockcopolymere wasserlösliche monomere Einheiten sind, vorzugsweise ausgewählt aus den monomeren Einheiten N,N-dimethylacrylamid, den monomeren Einheiten N-vinylpyrrolidin-2-on, den monomeren Ethylenoxiden und Mischungen davon.

**8.** Polymerisierbare Mischung nach einem der vorhergehenden Ansprüche, **dadurch gekennzeichnet, dass** der Block A nicht kompatibel mit dem ersten heisshärtenden Material ist.

9. Polymerisierbare Mischung nach einem der vorhergehenden Ansprüche, **dadurch gekennzeichnet, dass** der Block B kompatibel mit dem ersten heisshärtenden Material ist.

10. Polymerisierbare Mischung nach einem der vorhergehenden Anspruche, **dadurch gekennzeichnet, dass** der Block A ein thermoplastisches Blockelastomer ist.

11. Polymerisierbare Mischung nach einem der vorhergehenden Ansprüche, **dadurch gekennzeichnet, dass** die Temperatur zur glasartigen Überführung von Block A unterhalb oder gleich 20°C ist.

12. Polymerisierbare Mischung nach Anspruch 11, **dadurch gekennzeichnet, dass** die Temperatur zur glasartigen Überführung von Block A unterhalb oder gleich 0°C ist.

13. Polymerisierbare Mischung nach einem der vorhergehenden Ansprüche, **dadurch gekennzeichnet, dass** die Temperatur zur glasartigen Überführung von Block B oberhalb oder gleich derjenigen des ersten heisshärtenden polymeren Materials ist.

14. Polymerisierbare Mischung nach einem der vorhergehenden Ansprüche, **dadurch gekennzeichnet, dass** Block A ein homopolymerer Block oder ein Blockcopolymerer ist umfassend wenigstens eine monomere Einheit, wobei besagte monomere Einheit ausgewählt ist aus 2-Methoxyethylacrylat, Butylacrylat, Methylacrylat, Benzylacrylat und 2-Phenoxyethylacrylat.

15. Polymerisierbare Mischung nach einem der vorhergehenden Ansprüche, **dadurch gekennzeichnet, dass** der Block B löslich ist in den Polythiolen und/oder den Polyolen, vorzugsweise Polythiolen, der heisshärtenden polymerisierbaren Zusammenstzung.

16. Polymerisierbare Mischung nach einem der vorhergehenden Ansprüche, **dadurch gekennzeichnet, dass** die blockweisen Copolymere vom Typ AB oder BAB sind.

17. Polymerisierbare Mischung nach einem der vorhergehenden Ansprüche, **dadurch gekennzeichnet, dass** das blockweise Copolymer ein Copolymer aus den Blöcken BAB ist, in dem A ein Poly(2-Methoxyethylacrylat) ist, B ein Poly(N,N-dimethylacrylamid-co-methylmethacrylat) ist, umfassend 58 Molprozent an monomeren N,N-Dimethylacrylamid Einheiten und 42 Molprozent der monomeren Methytmethacrytat Einheiten.

18. Polymerisierbare Mischung nach einem der vorhergehenden Ansprüche, **dadurch gekennzeichnet, dass** das molare Verhältnis von Block A hinsichtlich der blockweisen Copolymere BAB unterhalb von 32 % ist.

19. Polymerisierbare Mischung nach einem der vorhergehenden Ansprüche, **dadurch gekennzeichnet, dass** die blockweisen Copolymere zahlenmäßig eine durchschnittliche molare Masse variierend zwischen 10000 bis 500000 g/mol, vorzugsweise von 20000 bis 200000 g/mol, haben.

20. Polymerisierbare Mischung nach einem der vorhergehenden Ansprüche, **dadurch gekennzeichnet, dass** das zweite Material 50 % der Masse der polymerisierbaren Mischung ausmacht.

21. Polymerisierbare Mischung nach Anspruch 20, **dadurch gekennzeichnet, dass** das zweite Material 5 bis 15 % der Masse der polymerisierbaren Mischung ausmacht.

22. Polymerisierbare Mischung nach einem der vorhergehenden Ansprüche, **dadurch gekennzeichnet, dass** die heisshärtende polymerisierbare Zusammensetzung 70 bis 95 % der Masse der polymerisierbaren Mischung ausmacht.

23. Polymerisierbare Mischung nach einem der vorhergehenden Ansprüche, **dadurch gekennzeichnet, dass** das (oder die) Polythiol(e) der Formel (I) entspricht:

$$R^1(SH)_{n1} \qquad (I)$$

worin n1 eine ganze Zahl von 2 bis 6 bezeichnet und $R^1$ ein aliphatisches, alizyklisches, heterozyklisches oder aromatisches Radikal bezeichnet, dessen Valenz gleich n1 ist.

24. Polymerisierbare Mischung nach einem der vorhergehenden Ansprüche, **dadurch gekennzeichnet, dass** das

(oder die) Polythiol(e) ausgewählt ist (sind) aus Pentaerythritol-tris(3-mercaptopropionat), Pentaerythritol-tetrakis (thioglycolat), Trimethylolpropan-tris(mercaptoacetat) und einer Zusammensetzung nach den Formeln (II) und (Va)

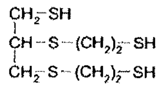 (II) 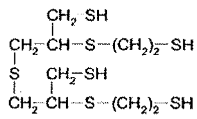 (Va)

**25.** Polymerisierbare Mischung nach einem der vorhergehenden Ansprüche, **dadurch gekennzeichnet, dass** das (oder die) Polythiol(e) der Formel (II) entsprechen

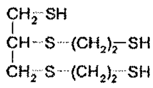 (II)

**26.** Polymerisierbare Mischung nach einem der vorhergehenden Ansprüche, **dadurch gekennzeichnet, dass** das (oder die) Polyisothiocyanate der Formel (VI) entsprechen

$$R^2(N{=}C{=}X)_{n2} \qquad (VI)$$

in der X ein Sauerstoff- oder Schwefelatom repräsentiert, n2 eine ganze Zahl von 2 bis 6 bezeichnet und $R^2$ ein aliphatische, alizyklisches, heterozyklisches oder aromatisches Radikal bezeichnet, dessen Valenz gleich n2 ist.

**27.** Polymerisierbare Mischung nach einem der vorhergehenden Ansprüche, **dadurch gekennzeichnet, dass** das (oder die) Polyisothiocyanat(e) ausgewählt ist (sind) aus Tolylendiisocyanat, Phenylendiisocyanat, Ethylphenylendiisocyanat, Isopropylphenylendiisocyanat, Xylylendiisocyanat, Diethylphenylendiisocyanat, Diisopropylphenylendiisocyanate, Naphtalendiisocyanat, Isophorondiisocyanat, Hexamethylendiisocyanat, Bis(isothiocyanatomethyl)-cyclohexan, Trimethylbenzentriisothiocyanat, Triisothiocyanat-benzen, (4,4'-diisotliiocyanat-diphenyl)-methan, (4,4'-diisothiocyanat-dicyclohexyl)-methan und den Zusammensetzungen nach den Formeln (VII), (VIII), (IX), (X) et (XI)

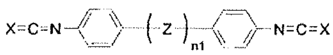

(VII)

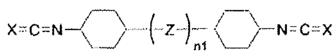

(VIII)

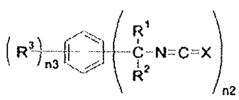

(IX)

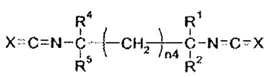

(X)

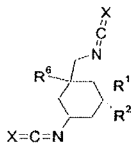

(XI)

in denen n1 gleich 0 oder 1, n2 eine ganze Zahl von 2 bis 4, n3 eine ganze Zahl von 1 bis 4, die Summe n2 + n3 ≤ 6, n4 eine ganze Zahl von 1 bis 10 ist, X bezeichnet O oder S, Z bezeichnet O, S, Se, NH, C=O, SO, $SO_2$, $SeO_2$, $CH_2$, -CH=CH- oder-$C(R)_2$-wobei R ein Wasserstoffatom oder ein Alkylradikal in $C_1$-$C_6$ repräsentiert, $R^1$, $R^2$, $R^4$, $R^5$, $R^6$ bezeichnen unabhängig voneinander ein Wasserstoffatom oder ein Alkylradikal in $C_1$-$C_6$, $R^3$ bezeichnet ein Wasserstoffatom, ein Halogenatom, oder ein Alkylradikal in $C_1$-$C_6$.

**28.** Polymerisierbare Mischung nach einem der vorhergehenden Ansprüche, **dadurch gekennzeichnet, dass** das (oder die) Polyisothiocyanat(e) ausgewählt ist (sind) aus Xylyendiisocyanaten.

**29.** Polymerisierbare Mischung nach einem der vorhergehenden Ansprüche, **dadurch gekennzeichnet, dass** die heisshärtende polymerisierbare Zusammensetumfassend eizung wenigstens ein Polythiol und wenigstens ein Polyisocyanat enthält.

**30.** Durchsichtiger Gegenstand mit einer verbesserten Festigkeit, umfassend eine Legierung eines ersten heisshärtenden polymerisierenden Materials, welche die Matrize des besagten Gegenstands bildet, und eines zweiten polymerisierenden Materials, welches im besagten ersten Material gelöst ist, **dadurch gekennzeichnet, dass** daraus eine polymerisierbare Mischung nach einem der vorhergehenden Ansprüche 1 bis 29 hergestellt ist.

**31.** Durchsichtiger Gegenstand nach Anspruch 30, **dadurch gekennzeichnet, dass** der kritische Faktor für die Intensität der Spannung des besagten Artikels in erster Linie das erste heisshärtende polymerisierbare Material ist.

**32.** Durchsichtiger Gegenstand nach einem der vorhergehenden Ansprüche 30 und 31, **dadurch gekennzeichnet, dass** die Temperatur zur glasartigen Überführung des besagten Artikels die des ersten heisshärtenden polymerisierbaren Materials ist.

**33.** Durchsichtiger Gegenstand nach einem der vorhergehenden Ansprüche 30 bis 32, **dadurch gekennzeichnet, dass** das Umsetzmodul mit 100°C des besagten Artikels das des ersten heisshärtenden polymerisierbaren Materials ist.

**34.** Durchsichtiger Gegenstand nach einem der vorhergehenden Ansprüche 30 bis 33, **dadurch gekennzeichnet, dass** es ein Modul ist.

**35.** Durchsichtiger Gegenstand nach einem der vorhergehenden Ansprüche 30 bis 34, **dadurch gekennzeichnet, dass** es organisches Glas ist.

**36.** Durchsichtiger Gegenstand nach einem der vorhergehenden Ansprüche 30 bis 34, **dadurch gekennzeichnet, dass** es eine ophtalmische Linse ist.

**37.** Verfahren zur Herstellung eines durchsichtigen Gegenstandes nach einem der vorhergehenden Ansprüche 30 bis 34 umfassen wenigstens die folgenden Schritte:

i) Lösen eines zweiten Materials in den Polythiolen und/oder den Polyolen, vorzugsweise Polythiolen;
ii) Zufügen der Polyisothiocyanate zu der Lösung erhalten aus Schritt i) und homogeniseren der resultierenden polymerisierbaren Mischung;
iii) Befüllen einer Form mit der polymerisierbaren Mischung aus Schritt ii);
iv) Polymerisieren der polymerisierbaren Mischung aus Schritt iii) zum Erhalt des besagten Artikel; und
v) Erhalt des durchsichtigen Artikels nach dem Entfernen aus der Form.

**38.** Verfahren nach dem Anspruch 37, **dadurch gekennzeichnet, dass** vor Schritt ii) ein Entgasungsschritt der Lösung aus Schritt i) durchgeführt wird.

**Figure 1**

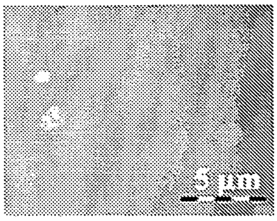


Formulation A /
5 % PMMA

**Expérience 1**

**Figure 2**

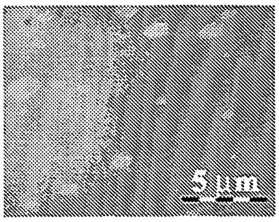


Formulation A / 5 %
poly(MMA-co-DMA) à
7,5 % molaire de DMA

**Expérience 2**

**Figure 3**

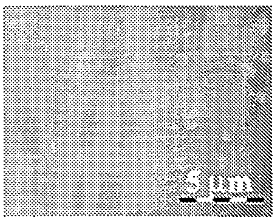


Formulation A / 5 %
poly(MMA-co-DMA) à
15 % molaire de DMA

**Expérience 3**

**Figure 4**

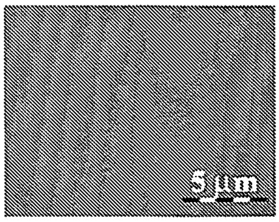


Formulation A / 5 %
poly(MMA-co-DMA) à
25 % molaire de DMA

**Expérience 4**

**Figure 5**

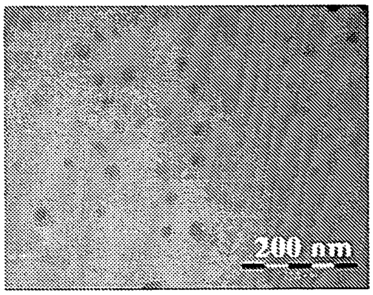


**Exemple 1**

**Figure 6**

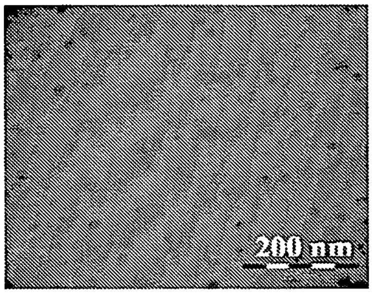


**Exemple 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2734827
- WO 0026272 A
- EP 0645647 A
- EP 1290088 A
- EP 394495 A
- US 4775733 A
- US 4609762 A
- US 5225472 A
- US 5442022 A
- US 5445828 A
- US 5702825 A
- US 5741831 A
- FR 2699541
- US 2004209707 A
- EP 524054 A
- EP 749987 A


### Littérature non-brevet citée dans la description


- **LEVITA, G. ; MARCHETTI, A. ; BUTTA, E.** *Polymer,* 1985, vol. 26, 1110-1116
- **MANZIONE, L. T. ; GILLHAM, J. K.** *J. Appl. Polym. Sci.,* 1981, vol. 26, 907-919
- **VERCHÈRE, D. ; SAUTEREAU, H. ; PASCAULT, J. P.** *J. Appl. Polym. Sci.,* 1990, vol. 41, 467-485
- **HOURSTON, D. J. ; LANE, J. M. ; ZHANG, H. X.** *Polym. Int.,* 1997, vol. 42, 349-355
- **RAGHAVA, R. S.** *J. Polym. Sci. B: Polym. Phys.,* 1987, vol. 25, 1017-1031
- **ASHIDA, T. ; KATOH, A. ; HANDA, K. ; OCHI, M.** *J. Appl. Polym. Sci.,* 1999, vol. 14, 2955-2962
- **KÖNCZÖL, L. ; DÖLL, W. ; BUCHHOLZ, U. ; MÜLHAUPT, R.** Ultimate properties of epoxy resins modified with a polysiloxane-polycaprolactone block copolymer. *J. Appl. Polym. Sci.,* 1994, vol. 54, 815-826
- **HÖFFLIN, F. ; KÖNCZÖL, L. ; DÖLL, W. ; MORAWIEC, J. ; MÜLHAUPT, R.** Toughening of epoxy resins modified with polyetherester block copolymers: the influence of modifier molecular architecture on mechanical properties. *J. Appl. Polym. Sci.,* 2000, vol. 76, 623-634
- **COURT, F. ; DAVID, L. ; GIRARD-REYDET, E. ; LEIBLER, L. ; PASCAULT, J. P.** ABC Triblock Copolymers/Epoxy-Diamine Blends. 1. Keys to achieve Nano-structured Thermosets. *Macromolecules,* 2002, vol. 35, 6245-6254
- **RITZENTHALER, S. ; COURT, F. ; GIRARD-REYDET, E. ; LEIBLER, L.; ; PASCAULT, J. P.** ABC Triblock Copolymers/Epoxy-Diamine Blends. 2. Parameters controlling the Morphologies and Properties. *Macromolecules,* 2003, vol. 36, 118-126
- **GIRARD-REYDET, E. ; PASCAULT, J. P. ; BONNET, A.; ; COURT, F. ; LEIBLER, L.** A new class of Epoxy Thermosets. *Macromol. Symp.,* 2003, vol. 198, 309-322
- **JEAN-FRANÇOIS BAUSSARD ; JEAN-LOUIS HABIB-JIWAN ; ANDRÉ LASCHEWSKY.** Enhanced Fôrster resonance energy transfer in electrostatically self-assembled multilayer films made from new fluorescently labeled polycations. *Langmuir,* 2003, vol. 19, 7963-7969